(19) Europäisches Patentamt
European Patent Office
Office européen des brevets

(11) EP 2 054 464 B1

(12) **EUROPEAN PATENT SPECIFICATION**

(45) Date of publication and mention of the grant of the patent:
**27.01.2010 Bulletin 2010/04**

(21) Application number: **07801893.4**

(22) Date of filing: **24.08.2007**

(51) Int Cl.:
***C08J 5/00*** *(2006.01)*

(86) International application number:
**PCT/EP2007/007468**

(87) International publication number:
**WO 2008/022802 (28.02.2008 Gazette 2008/09)**

(54) **BLOWN FILM OF POLYPROPYLENE**

BLASFOLIE AUS POLYPROPYLEN

FILM SOUFFLÉ DE POLYPROPYLÈNE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **25.08.2006 EP 06017789**

(43) Date of publication of application:
**06.05.2009 Bulletin 2009/19**

(73) Proprietor: **Borealis Technology OY**
**06101 Porvoo (FI)**

(72) Inventors:
- **STADLBAUER, Manfred**
  **A-4040 Linz (AT)**
- **ERNST, Eberhard**
  **A-4210 Unterweitersdorf (AT)**
- **NIEDERSÜSS, Peter**
  **A-4312 Ried/Riedmark (AT)**

(74) Representative: **Lux, Berthold et al**
**Maiwald Patentanwalts GmbH**
**Elisenhof**
**Elisenstraße 3**
**80335 München (DE)**

(56) References cited:
**WO-A-01/98409**
**WO-A-95/30708**
**WO-A-99/09096**
**WO-A2-03/040233**
**US-A1- 2004 072 005**

Remarks:
The file contains technical information submitted after the application was filed and not included in this specification

EP 2 054 464 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to new blown films comprising polypropylene and its manufacture.

Polypropylenes succeed more and more to replace polyethylenes in many technical fields as quite often the new generation of polypropylenes have enhanced properties compared to conventional polyethylene materials. This applies also for the field of blown films where polypropylene take advantage of molecular engineering to overcome previous material shortcomings for blown-film production. Nowadays it is possible to manufacture blown films on the basis of polypropylene having a high heat resistance and high stiffness as well as in the molten state a high melt strength. Such polypropylenes are *inter alia* characterized by a rather high viscosity, i.e. by a rather high molecular mass. The high viscosity improves the strain-hardening elongational viscosity performance. However this improvement has to be paid with high zero-shear viscosity. As a consequence thereof blown films with good stiffness behaviour can only produced with a limited output because of the high pressure build-up in the extrusion lines. To overcome this problem the used polypropylenes are blended with cross-linked polypropylenes. However such cross-linked polypropylenes are difficult to manufacture and in addition influence negatively the strain-hardening as well as the optical properties of the final blown film.

Moreover in case food or medical products shall be packaged it is desired that the sealing of said products can be effected at rather low temperatures to avoid any risk of thermal damage. In addition of course the standards issued by the food and drug administration (FDA), i.e. inter alia having low amounts of extractables, should be met. Moreover the blown film should be rather stiff. Certainly the transparency of the film should also be good as the market favors transparent packaging materials.

To overcome the above stated problems new blown films are desired. Thus the object of the present invention is to provide a blown film with good mechanical properties, like a high stiffness, based on a polymer, preferably on a polypropylene, which can be converted in a blown film with high output rates. It is in particular preferred that the blown film can be used for food and/or medical packaging without the risk of heat damage and/or without the risk of contamination of said products.

The finding of the present invention is to provide a blown film based on polypropylene being multi-branched, i.e. not only the polypropylene backbone is furnished with a larger number of side chains (branched polypropylene) but also some of the side chains themselves are provided with further side chains.

Hence, the present invention is related, in a first embodiment, to a blown film comprising a polypropylene, wherein

said polypropylene is produced in the presence of a metallocene catalyst, preferably in the presence of a metallocene catalyst as further defined below, and

said film and/or said polypropylene has (have)

a. a branching index g' of less than 1.00 and

b. a strain hardening index (SHI@1$s^{-1}$) of at least 0.30 measured by a deformation rate $d\varepsilon/dt$ of 1.00 $s^{-1}$ at a temperature of 180 °C,

wherein the strain hardening index (SHI) is defined as the slope of the logarithm to the basis 10 of the tensile stress growth function (lg ($\eta_E^+$)) as function of the logarithm to the basis 10 of the Hencky strain (lg ($\varepsilon$)) in the range of Hencky strains between 1 and 3.

Preferably the blown film is free of polyethylene, even more preferred the blown film comprises a polypropylene as defined above and further defined below as the only polymer component.

Surprisingly, it has been found that blown films with such characteristics have superior properties compared to the films known in the art. Especially, the melt of the film in the extrusion process has a high stability, i.e. the extrusion line can be operated at a high screw speed (see Figure 6). In addition the inventive blown film is characterized by a rather high stiffness at a low heat sealing initiation temperature (SIT) in comparison to polymers being state of the art. Moreover the inventive blown films are characterized by good optical properties.

As stated above, one characteristic of the blown film and/or the polypropylene component of the inventive film according to the present invention is in particular its (their) extensional melt flow properties. The extensional flow, or deformation that involves the stretching of a viscous material, is the dominant type of deformation in converging and squeezing flows that occur in typical polymer processing operations. Extensional melt flow measurements are particularly useful in polymer characterization because they are very sensitive to the molecular structure of the polymeric system being tested. When the true strain rate of extension, also referred to as the Hencky strain rate, is constant, simple extension is said to be a "strong flow" in the sense that it can generate a much higher degree of molecular orientation and stretching than flows in simple shear. As a consequence, extensional flows are very sensitive to crystallinity and macro-structural effects, such as long-chain branching, and as such can be far more descriptive with regard to polymer characterization than other types of bulk rheological measurement which apply shear flow.

Accordingly one preferred requirement of the invention is that the polypropylene of the blown film has a branching index g' of less than 1.00, more preferably less than 0.90, still more preferably less than 0.80. In the preferred embodiment, the branching index g' shall be less than 0.75, i.e. 0.7 or less. On the other hand it is preferred that the branching index g' is more than 0.6, still more preferably 0.7 or more. Thus it is preferred that the branching index g' of the polypropylene is in the range of 0.6 to below 1.0, more preferred in the range of more than 0.65 to 0.95, still more preferred in the range of 0.7 to 0.95. The branching index g' defines the degree of branching and correlates with the amount of branches of a polymer. The branching index g' is defined as $g'=[IV]_{br}/[IV]_{lin}$ in which g' is the branching index, $[IV_{br}]$ is the intrinsic viscosity of the branched polypropylene and [IV]lin is the intrinsic viscosity of the linear polypropylene having the same weight average molecular weight (within a range of ± 10 %) as the branched polypropylene. Thereby, a low g'-value is an indicator for a high branched polymer. In other words, if the g'-value decreases, the branching of the polypropylene increases. Reference is made in this context to B.H. Zimm and W.H. Stockmeyer, J. Chem. Phys. 17,1301 (1949). This document is herewith included by reference.

When measured on the blown film, the branching index g' is preferably of less than 1.00, more preferably less than 0.90, still more preferably less than 0.80. In the preferred embodiment, the branching index g' of the blown film shall be less than 0.75, i.e. 0.7 or less.

The intrinsic viscosity needed for determining the branching index g' is measured according to DIN ISO 1628/1, October 1999 (in Decalin at 135 °C).

A further preferred requirement is that the strain hardening index (SHI@ $1s^{-1}$) of the polypropylene of the blown film shall be at least 0.30, more preferred of at least 0.40, still more preferred of at least 0.50. In a preferred embodiment the strain hardening index (SHI@$1s^{-1}$) is at least 0.55.

The strain hardening index is a measure for the strain hardening behavior of the polymer melt, in particular the polypropylene melt. In the present invention, the strain hardening index (SHI@$1s^{-1}$) has been measured by a deformation rate $d\varepsilon/dt$ of 1.00 $s^{-1}$ at a temperature of 180 °C for determining the strain hardening behavior, wherein the strain hardening index (SHI) is defined as the slope of the tensile stress growth function $\eta_E^+$ as a function of the Hencky strain ε on a logarithmic scale between 1.00 and 3.00 (see figure 1). Thereby the Hencky strain ε is defined by the formula $\varepsilon = \dot{\varepsilon}_H \cdot t$, wherein the Hencky strain rate $\dot{\varepsilon}_H$ is defined by the formula

$$\dot{\varepsilon}_H = \frac{2 \cdot \Omega \cdot R}{L_0} \ [s^{-1}]$$

with

"$L_0$" is the fixed, unsupported length of the specimen sample being stretched which is equal to the centerline distance between the master and slave drums

"R" is the radius of the equi-dimensional windup drums, and

"Ω" is a constant drive shaft rotation rate.

In turn the tensile stress growth function $\eta_E^+$ is defined by the formula

$$\dot{\varepsilon}_H = \frac{2 \cdot \Omega \cdot R}{L_0} \ [s^{-1}]$$

with

$$\eta_E^+(\varepsilon) = \frac{F(\varepsilon)}{\dot{\varepsilon}_H \cdot A(\varepsilon)}$$

and

$$T(\varepsilon) = 2 \cdot R \cdot F(\varepsilon)$$

wherein
the Hencky strain rate $\dot{\varepsilon}_H$ is defined as for the Hencky strain ε
"F" is the tangential stretching force
"R" is the radius of the equi-dimensional windup drums
"T" is the measured torque signal, related to the tangential stretching force "F"
"A" is the instantaneous cross-sectional area of a stretched molten specimen
"$A_0$" is the cross-sectional area of the specimen in the solid state (i.e. prior to melting),
"$d_s$" is the solid state density and
"$d_M$" the melt density of the polymer.

When measured on the blown film, the strain hardening index (*SHI@1s*$^{-1}$) is preferably at least 0.30, more preferred of at least 0.40, yet more preferred the strain hardening index (*SHI@1s*$^{-1}$) is of at least 0.40. In a preferred embodiment the strain hardening index (SHI@1s$^{-1}$) is at least 0.55.

Another physical parameter which is sensitive to heat sealing initiation temperature (SIT) and the strain rate thickening is the so-called multi-branching index (MBI), as will be explained below in further detail.

Similarly to the measurement of SHI@1s$^{-1}$, a strain hardening index (SHI) can be determined at different strain rates. A strain hardening index (SHI) is defined as the slope of the logarithm to the basis 10 of the tensile stress growth function $\eta_E^+$, 1g($\eta_E^+$), as function of the logarithm to the basis 10 of the Hencky strain ε, lg(ε), between Hencky strains 1.00 and 3.00 at a at a temperature of 180 °C, where a SHI@0.1 s$^{-1}$ is determined with a deformation rate $\dot{\varepsilon}_H$ of 0.10 s$^{-1}$, a SHI@0.3 s$^{-1}$ is determined with a deformation rate $\dot{\varepsilon}_H$ of 0.30 s$^{-1}$, a SHI@3 s$^{-1}$ is determined with a deformation rate $\dot{\varepsilon}_H$ of 3.00 s$^{-1}$, and a SHI@10 s$^{-1}$ is determined with a deformation rate $\dot{\varepsilon}_H$ of 10.0 s$^{-1}$. In comparing the strain hardening index (SHI) at those five strain rates $\dot{\varepsilon}_H$ of 0.10, 0.30, 1.00, 3.00 and 10.00 s$^{-1}$, the slope of the strain hardening index (SHI) as function of the logarithm to the basis 10 of $\dot{\varepsilon}_H$ (lg ($\dot{\varepsilon}_H$)) is a characteristic measure for multi-branching. Therefore, a multi-branching index (MBI) is defined as the slope of the strain hardening index (SHI) as a function of lg ($\dot{\varepsilon}_H$), i.e. the slope of a linear fitting curve of the strain hardening index (SHI) versus lg ($\dot{\varepsilon}_H$) applying the least square method, preferably the strain hardening index (SHI) is defined at deformation rates $\dot{\varepsilon}_H$ between 0.05 s$^{-1}$ and 20.00 s$^{-1}$, more preferably between 0.10 s$^{-1}$ and 10.00 s$^{-1}$, still more preferably at the deformations rates 0.10, 0.30, 1.00, 3.00 and 10.00 s$^{-1}$. Yet more preferably the *SHI*-values determined by the deformations rates 0.10, 0.30, 1.00, 3.00 and 10.00 s$^{-1}$ are used for the linear fit according to the least square method when establishing the multi-branching index (MBI).

Hence, a further preferred requirement of the invention is that the blown film and/or the polypropylene of said film has a multi-branching index (MBI) of at least 0.15, more preferably of at least 0.20, and still more preferred of at least 0.25. In a still more preferred embodiment the multi-branching index (MBI) is at least 0.28.

It is in particular preferred that the blown film and/or the polypropylene of said film has (have) a branching index g' of less than 1.00, a strain hardening index (SHI@1s$^{-1}$) of at least 0.30 and multi-branching index (MBI) of at least 0.15. Still more preferred the blown film and/or the polypropylene of said film has (have) a branching index g' of less than 0.80, a strain hardening index (SHI@1s$^{-1}$) of at least 0.40 and multi-branching index (MBI) of at least 0.15. In another preferred embodiment the blown film and/or the polypropylene of said film has (have) a branching index g' of less than 1.00, a strain hardening index (SHI@1s$^{-1}$) of at least 0.30 and multi-branching index (MBI) of at least 0.20. In still another preferred embodiment the blown film and/or the polypropylene of said film has (have) a branching index g' of less than 0.80, a strain hardening index (SHI@1s$^{-1}$) of at least 0.40 and multi-branching index (MBI) of at least 0.20. In yet another preferred embodiment the blown film and/or the polypropylene of said film has (have) a branching index g' of less than 0.80, a strain hardening index (SHI@1s$^{-1}$) of at least 0.50 and multi-branching index (MBI) of at least 0.30.

Accordingly, the inventive blown films and/or the polypropylenes of said film are characterized by the fact that their strain hardening index (SHI) increases with the deformation rate $\dot{\varepsilon}_H$, i.e. a phenomenon which is not observed in other blown films and/or polypropylenes. Single branched polymer types (so called Y polymers having a backbone with a single long side-chain and an architecture which resembles a "Y") or H-branched polymer types (two polymer chains coupled with a bridging group and a architecture which resemble an "H") as well as linear or short chain branched polymers do not show such a relationship, i.e. the strain hardening index (SHI) is not influenced by the deformation rate (see Figures 2 and 3). Accordingly, the strain hardening index (SHI) of known polymers, in particular known polypropylenes and polyethylenes, does not increase or increases only negligible with increase of the deformation rate ($d\varepsilon/dt$). Industrial conversion processes which imply elongational flow operate at very fast extension rates. Hence the advantage of a material which shows more pronounced strain hardening (measured by the strain hardening index SHI) at high strain rates becomes obvious. The faster the material is stretched, the higher the strain hardening index (SHI) and hence the more stable the material will be in conversion. Especially in the fast extrusion process, like in the blown film extrusion process, the melt of the multi-branched polypropylenes has a high stability. Moreover the inventive blown films are characterized by a rather high stiffness even though the sealing temperatures are low.

For further information concerning the measuring methods applied to obtain the relevant data for the branching index g', the tensile stress growth function $\eta_E^+$, the Hencky strain rate $\dot{\varepsilon}_H$, the Hencky strain ε and the multi-branching index (MBI) it is referred to the example section.

In addition it is preferred that the inventive blown film as defined above is **characterized in that**

a) the heat sealing initiation temperature (SIT) of said film together with the tensile modulus ($E_{IM}$) of said film in an injection-molded state measured according to ISO 527-2 (at a speed of 1 mm/min); and/or

b) the heat sealing initiation temperature (SIT) of said film together with the tensile modulus ($E_{IM}$) of the polypropylene of said film in an injection-molded state measured according to ISO 527-2 (at a speed of 1 mm/min) fulfil(s) the equation

$$SIT\ [°C] - 0.03 \cdot E_{IM}\ [MPa] \leq 92.$$

The above given equation is the result of the finding of the present invention, that blown films based on polypropylene, i.e. the multi-branching polypropylene, as defined above and further defined below can be provided which have surprisingly a high stiffness even though the sealing temperature of said films is rather low. Such results are preferably obtained with a multi-branching propylene homopolymer (as further defined below) as well as with the multi-branching polypropylene copolymers (as further defined below), which comprise low amounts of comonomers, more preferably low amounts of ethylene, i.e. lower than 10 mol%. The above given equation (linear equation) is the result of the following tests: Different inventive blown films are produced varying only in the ethylene content (preferably between 0 to 10 mol%) of the polypropylene, i.e. the multi-branching polypropylene, comprised in said blown films. From said blown films the heat sealing initiation temperature (SIT) [˚C] has been measured according to the method described in the example section. Moreover the tensile modules ($E_{IM}$) [MPa] of the different polypropylenes used in said blown films in an injection-molded state has been also determined (ISO 527-2 (at a speed of 1 mm/min)). The measured tensile modulus ($E_{IM}$) values [MPa] are plotted against the measured heat sealing initiation temperature (SIT) values [˚C] and thereby - after a linear fit according to the least square method - resulting in a linear relationship, i.e. a linear equation. Exactly the same procedure is undertaken with blown films which are state of the art, namely with blown films based on polypropylene produced in the present of a Ziegler-Natta-catalyst. Said polypropylenes are either propylene homopolymers or polypropylene copolymers, which comprise low amounts of ethylene, i.e. lower than 10 mol%. The properties of said blown films are determined, i.e. the heat sealing initiation temperature (SIT) [˚C] as well as the tensile modules ($E_{IM}$) [MPa] of the different polypropylenes used in the known blown films in an injection-molded state has been determined (ISO 527-2 (at a speed of 1 mm/min)). The tensile modulus ($E_{IM}$) values [MPa] so obtained are plotted against the heat sealing initiation temperature (SIT) values [˚C] and thereby - after a linear fit according to the least square method - resulting in a linear relationship, i.e. a linear equation. What can be observed, when comparing the results of the inventive blown films with the results of the blown films of the state of the art, is, that only the inventive films fulfil the above given equation whereas the comparative films do not (see Figure 5). Further information concerning the exact evaluation of the equation can be deducted from the example section.

Accordingly, rather low values of the above stated equation, i.e. values of not more than 92, indicate that the inventive film has a good stiffness and can be simultaneous easily sealed by rather low temperatures (note, that the sum of SIT and $E_{IM}$ is strongly influenced by SIT as the $E_{IM}$-values are multiplied by 0.03). Thus it is preferred that the sum of the heat sealing initiation temperature (SIT) and the tensile modulus ($E_{IM}$) as defined above is not more than 91. In a preferred embodiment, where the blown film comprises a polypropylene copolymer, i.e. a multi-branched polypropylene copolymer, as defined in the present invention the sum of SIT and $E_{IM}$ as defined above shall not exceed 90.5. In another preferred embodiment, where the blown film comprises a polypropylene homopolymer, i.e. a multi-branched polypropylene homopolymer, as defined in the present invention the sum of SIT and $E_{IM}$ as defined above shall not exceed 90.0.

Of course it is preferred that not only the equation as defined above shall have values of not more than 92, but also that the heat sealing initiation temperature (SIT) of the blown film shall preferably not exceed a specific value, i.e. shall preferably not exceed 140 ˚C. The heat sealing initiation temperature (SIT) of a film is directly related to the molecular weight and the degree of branching of the polymer. Thus with a multi-branched polypropylene as described herein blown films with low heat sealing initiation temperatures (SIT) by a rather high stiffness can be achieved. Accordingly it is preferred that the heat sealing temperatures of the blown film is not higher than 140 ˚C, still more preferred not higher than 138 ˚C and yet more preferred not higher than 135 ˚C. In particular it is preferred that the heat sealing initiation temperatures (SIT) of the blown film and/or the polypropylene of said film is not higher than 140 ˚C, still more preferred not higher than 138 ˚C and yet more preferred not higher than 135 ˚C in case the polypropylene is a propylene homopolymer, i.e. a multi-branched propylene homopolymer, as defined in the present invention. In case the polypropylene in the blown film is a propylene copolymer, i.e. a multi-branched propylene copolymer, as defined in the present invention, it is preferred that the heat sealing initiation temperatures (SIT) of the blown film and/or the polypropylene of said film is not higher than 120 ˚C, still more preferred not higher than 118 ˚C and yet more preferred not higher than 114˚C.

The measuring method for the heat sealing initiation temperature (SIT) is defined in the example section.

On the other hand the tensile modulus ($E_{IM}$) shall be preferably rather high. Thus it is preferred that the tensile modulus ($E_{IM}$) of the blown film and/or the polypropylene of said film in an injection-molded state is at least 1300 MPa, more preferably at least 1400 MPa in case the polypropylene is a propylene homopolymer, i.e. a multi-branched propylene homopolymer, as defined in the present invention. In case the polypropylene in the blown film is a propylene copolymer, i.e. a multi-branched propylene copolymer, as defined in the present invention, it is preferred that the tensile modulus ($E_{IM}$) of blown film and/or the polypropylene of said film in an injection-molded state is at least 550 MPa, more preferably at least 650 MPa.

Moreover, the tensile modulus of the blown film itself shall be rather high. Thus it is preferred that the tensile modulus of the blown film based on a propylene homopolymer shall be at least 750 MPa, more preferably at least 800 MPa.

The heat sealing initiation temperature (SIT) of polymers can be lowered by rather high amount of extractables. However, extractables are undesirable in the field of food packaging or in the field of medical packaging. Thus it is preferred that the low heat sealing initiation temperature (SIT) values of the blown film are not achieved by adding any plasticizer and/or by using a polypropylene with rather high amounts of comonomers, in particular rather high amounts of ethylene. Thus it is preferred that the comonomer content, preferably the ethylene content, in the polypropylene and/or in the blown film does not exceed 10 mol%, more preferably does not exceed 8 mol%, yet more preferably does not exceed 6 mol%. It is in particular preferred that the polypropylene is a propylene homopolymer as defined below. In addition it is preferred that the blown film does not comprise any plasticizer in detectable amounts.

In a second embodiment, the present invention is related to a blown film comprising a polypropylene, wherein said film and/or said polypropylene has (have) a strain rate thickening which means that the strain hardening increases with extension rates. A strain hardening index (SHI) can be determined at different strain rates. A strain hardening index (SHI) is defined as the slope of the tensile stress growth function $\eta_E^+$ as function of the Hencky strain $\varepsilon$ on a logarithmic scale between 1.00 and 3.00 at a at a temperature of 180 °C, where a SHI@0.1s$^{-1}$ is determined with a deformation rate $\dot{\varepsilon}_H$ of 0.10 s$^{-1}$, a SHI@0.3s$^{-1}$ is determined with a deformation rate $\dot{\varepsilon}_H$ of 0.30 s$^{-1}$, a SHI@3s$^{-1}$ is determined with a deformation rate $\dot{\varepsilon}_H$ of 3.00 s$^{-1}$, a SHI@10s$^{-1}$ is determined with a deformation rate $\dot{\varepsilon}_H$ of 10.00 s$^{-1}$. In comparing the strain hardening index at those five strain rates $\dot{\varepsilon}_H$ of 0.10, 0.30, 1.0, 3.0 and 10.00s $^1$, the slope of the strain hardening index (SHI) as function of the logarithm to the basis 10 of $\dot{\varepsilon}_H$, lg ($\dot{\varepsilon}_H$), is a characteristic measure for multi-branching. Therefore, a multi-branching index (MBI) is defined as the slope of the strain hardening index (SHI as a function of lg ($\dot{\varepsilon}_H$), i.e. the slope of a linear fitting curve of the strain hardening index (SHI) versus lg ($\dot{\varepsilon}_H$) applying the least square method, preferably the strain hardening index (SHI) is defined at deformation rates $\dot{\varepsilon}_H$ between 0.05 s$^{-1}$ and 20.0 s$^{-1}$, more preferably between 0.10 s$^{-1}$ and 10.0 s$^{-1}$, still more preferably at the deformations rates 0.10, 0.30, 1.00, 3.00 and 10.0 s$^{-1}$.Yet more preferably the SHI-values determined by the deformations rates 0.10, 0.30, 1.00, 3.00 and 10.0 s$^{-1}$ are used for the linear fit according to the least square method when establishing the multi-branching index (MBI).

Hence, in the second embodiment the blown film and/or the polypropylene of said blown film has (have) a multi-branching index (MBI) of at least 0.15.

Preferably the blown film is free of polyethylene, even more preferred the blown film comprises a polypropylene as defined above and further defined below as the only polymer component.

Preferably said polypropylene is produced in the presence of a metallocene catalyst, more preferably in the presence of a metallocene catalyst as further defined below.

Surprisingly, it has been found that blown films with such characteristics have superior properties compared to the films known in the art. Especially, the melt of the film in the extrusion process has a high stability, i.e. the extrusion line can be operated at a high screw speed (see Figure 6). In addition the inventive blown film is characterized by a rather high stiffness at a low heat sealing initiation temperature (SIT) in comparison to polymers being sate of the art. Moreover the inventive blown films are characterized by good optical properties.

As stated above, one characteristic of the blown film and/or the polypropylene component of the inventive film is (are) in particular the extensional melt flow properties. The extensional flow, or deformation that involves the stretching of a viscous material, is the dominant type of deformation in converging and squeezing flows that occur in typical polymer processing operations. Extensional melt flow measurements are particularly useful in polymer characterization because they are very sensitive to the molecular structure of the polymeric system being tested. When the true strain rate of extension, also referred to as the Hencky strain rate, is constant, simple extension is said to be a "strong flow" in the sense that it can generate a much higher degree of molecular orientation and stretching than flows in simple shear. As a consequence, extensional flows are very sensitive to crystallinity and macro-structural effects, such as long-chain branching, and as such can be far more descriptive with regard to polymer characterization than other types of bulk rheological measurement which apply shear flow.

As stated above, the first requirement according to the second embodiment is that the blown film and/or the polypropylene of said film has (have) a multi-branching index (MBI) of at least 0.15, more preferably of at least 0.20, and still more preferred of at least 0.30.

As mentioned above, the multi-branching index (MBI) is defined as the slope of the strain hardening index (SHI) as a function of lg ($d\varepsilon/dt$) [d SHI/d lg ($d\varepsilon/dt$)].

Accordingly, the inventive blown film and/or the polypropylene of said film is (are) characterized by the fact that their strain hardening index (SHI) increases with the deformation rate $\dot{\varepsilon}_H$, i.e. a phenomenon which is not observed in other polypropylenes. Single branched polymer types (so called Y polymers having a backbone with a single long side-chain and an architecture which resembles a "Y") or H-branched polymer types (two polymer chains coupled with a bridging group and a architecture which resemble an "H") as well as linear or short chain branched polymers do not show such a relationship, i.e. the strain hardening index (SHI) is not influenced by the deformation rate (see Figures 2 and 3). Accordingly, the strain hardening index (SHI) of known polymers, in particular known polypropylenes and polyethylenes, does not increase or increases only negligible with increase of the deformation rate ($d\varepsilon/dt$). Industrial conversion processes which imply elongational flow operate at very fast extension rates. Hence the advantage of a material which shows more pronounced strain hardening (measured by the strain hardening index (SHI)) at high strain rates becomes obvious. The faster the material is stretched, the higher the strain hardening index (SHI) and hence the more stable the material will be in conversion. Especially in the fast extrusion process, like in the blown film extrusion process, the melt of the multibranched polypropylenes has a high stability. Moreover the inventive blown films are characterized by a rather high stiffness even though the sealing temperatures are low.

A further preferred requirement is that the strain hardening index (SHI@1s$^{-1}$) of the blown film and/or the polypropylene of said film shall be at least 0.30, more preferred of at least 0.40, still more preferred of at least 0.50.

The strain hardening index (SHI) is a measure for the strain hardening behavior of the polymer melt, in particular of the polypropylene melt. In the present invention, the strain hardening index (SHI@1s$^{-1}$) has been measured by a deformation rate ($d\varepsilon/dt$) of 1.00 s$^{-1}$ at a temperature of 180 °C for determining the strain hardening behavior, wherein the strain hardening index (SHI) is defined as the slope of the tensile stress growth function $\eta_E^+$ as a function of the Hencky strain $\varepsilon$ on a logarithmic scale between 1.00 and 3.00 (see figure 1). Thereby the Hencky strain $\varepsilon$ is defined by the formula $\varepsilon = \dot{\varepsilon}_H \cdot t$, wherein
the Hencky strain rate $\dot{\varepsilon}_H$ is defined by the formula

$$\dot{\varepsilon}_H = \frac{2 \cdot \Omega \cdot R}{L_0} \ [s^{-1}]$$

with
"$L_0$" is the fixed, unsupported length of the specimen sample being stretched which is equal to the centerline distance between the master and slave drums,
"R" is the radius of the equi-dimensional windup drums, and
"$\Omega$" is a constant drive shaft rotation rate.

In turn the tensile stress growth function $\eta_E^+$ is defined by the formula

$$\eta_E^+(\varepsilon) = \frac{F(\varepsilon)}{\dot{\varepsilon}_H \cdot A(\varepsilon)}$$

with

$$T(\varepsilon) = 2 \cdot R \cdot F(\varepsilon)$$

and

$$A(\varepsilon) = A_0 \cdot \left(\frac{d_S}{d_M}\right)^{2/3} \cdot \exp(-\varepsilon)$$

wherein

the Hencky strain rate $\dot{\varepsilon}_H$ is defined as for the Hencky strain ε
"F" is the tangential stretching force
"R" is the radius of the equi-dimensional windup drums
"T" is the measured torque signal, related to the tangential stretching force "F"
"A" is the instantaneous cross-sectional area of a stretched molten specimen
"$A_0$" is the cross-sectional area of the specimen in the solid state (i.e. prior to melting),
"$d_s$" is the solid state density and
"$d_M$" the melt density of the polymer.

In addition, it is preferred that the branching index g' of the inventive polypropylene of the bown film shall be less than 1.00, more preferably less than 0.90, still more preferably less than 0.80. In the preferred embodiment, the branching index g' shall be less than 0.75, i.e. 0.70 or less. On the other hand it is preferred that the branching index g' is more than 0.6, still more preferably 0.7 or more. Thus it is preferred that the branching index g' of the polypropylene is in the range of 0.6 to below 1.0, more preferred in the range of more than 0.65 to 0.95, still more preferred in the range of 0.7 to 0.95. The branching index g' defines the degree of branching and correlates with the amount of branches of a polymer. The branching index g' is defined as $g'=[IV]_{br}/[IV]_{lin}$ in which g' is the branching index, $[IV_{br}]$ is the intrinsic viscosity of the branched polypropylene and $[IV]_{lin}$ is the intrinsic viscosity of the linear polypropylene having the same weight average molecular weight (within a range of ± 10 %) as the branched polypropylene. Thereby, a low g'-value is an indicator for a high branched polymer. In other words, if the g'-value decreases, the branching of the polypropylene increases. Reference is made in this context to B.H. Zimm and W.H. Stockmeyer, J. Chem. Phys. 17,1301 (1949). This document is herewith included by reference.

When measured on the blown film, the branching index g' is preferably of less than 1.00, more preferably less than 0.90, still more preferably less than 0.80. In the preferred embodiment, the branching index g' of the blown film shall be less than 0.75, i.e. 0.7 or less.

The intrinsic viscosity needed for determining the branching index g' is measured according to DIN ISO 1628/1, October 1999 (in Decalin at 135 °C).

For further information concerning the measuring methods applied to obtain the relevant data for the a multi-branching index (MBI), the tensile stress growth function $\eta_E^+$, the Hencky strain rate $\dot{\varepsilon}_H$, the Hencky strain ε and the branching index g it is referred to the example section.

It is in particular preferred that the inventive blown film and/or the polypropylene of said film has (have) a branching index g' of less than 1.00, a strain hardening index (SHI@$1s^{-1}$) of at least 0.30 and multi-branching index (MBI) of at least 0.15. Still more preferred the inventive blown film and/or the polypropylene of said film has (have) a branching index g' of less than 0.80, a strain hardening index (SHI@$1s^{-1}$) of at least 0.40 and multi-branching index (MBI) of at least 0.15. In another preferred embodiment the inventive blown film and/or the polypropylene of said film has (have) a branching index g' of less than 1.00, a strain hardening index (SHI@$1s^{-1}$) of at least 0.30 and multi-branching index (MBI) of at least 020. In still another preferred embodiment the inventive blown film and/or the polypropylene of said film has (have) a branching index g' of less than 0.80, a strain hardening index (SHI@$1s^{-1}$) of at least 0.40 and multi-branching index (MBI) of at least 020. In yet another preferred embodiment the inventive blown film and/or the polypropylene of said film has (have) a branching index g' of less than 0.80, a strain hardening index (SHI@$1s^{-1}$) of at least 0.50 and multi-branching index (MBI) of at least 030.

In addition it is preferred that the inventive blown film as defined above for the second embodiment is **characterized in that**

a) the heat sealing initiation temperature (SIT) of said film together with the tensile modulus ($E_{IM)}$ of said film in an injection-molded state measured according to ISO 527-2 (at a speed of 1 mm/min); and/or
b) the heat sealing initiation temperature (SIT) of said film together with the tensile modulus ($E_{IM}$) of the polypropylene of said film in an injection-molded state measured according to ISO 527-2 (at a speed of 1 mm/min) fulfil(s) the equation

$$SIT\ [°C] - 0.03 \cdot E_{IM}\ [MPa] \leq 92.$$

The above given equation is the result of the finding of the present invention, that blown films based on polypropylene, i.e. the multi-branching polypropylene, as defined above and further defined below can be provided which have surprisingly a high stiffness even though the sealing temperature of said films is rather low. Such results are preferably obtained with a multi-branching propylene homopolymer (as further defined below) as well as with the multi-branching polypropylene copolymers (as further defined below), which comprise low amounts of comonomers, more preferably low amounts of ethylene, i.e. lower than 10 mol%. The above given equation (linear equation) is the result of the following tests: Different inventive blown films are produced varying only in the ethylene content (preferably between 0 to 10 mol%) of the polypropylene, i.e. the multi-branching polypropylene, comprised in said blown films. From said blown films the heat sealing initiation temperature (SIT) [°C] has been measured according to the method described in the example section. Moreover the tensile modules ($E_{IM}$) [MPa] of the different polypropylenes used in said blown films in an injection-molded state has been also determined (ISO 527-2 (at a speed of 1 mm/min)). The measured tensile modulus ($E_{IM}$) values [MPa] are plotted against the measured heat sealing initiation temperature (SIT) values [°C] and thereby - after a linear fit according to the least square method - resulting in a linear relationship, i.e. a linear equation. Exactly the same procedure is undertaken with blown films which are state of the art, namely with blown films based on polypropylene produced in the present of a Ziegler-Natta-catalyst. Said polypropylenes are either propylene homopolymers or polypropylene copolymers, which comprise low amounts of ethylene, i.e. lower than 10 mol%. The properties of said blown films are determined, i.e. the heat sealing initiation temperature (SIT) [°C] as well as the tensile modules ($E_{IM}$) [MPa] of the different polypropylenes used in the known blown films in a injection-molded state has been determined (ISO 527-2 (at a speed of 1 mm/min)). The tensile modulus ($E_{IM}$) values [MPa] so obtained are plotted against the heat sealing initiation temperature (SIT) values [°C] and thereby - after a linear fit according to the least square method - resulting in a linear relationship, i.e. a linear equation. What can be observed, when comparing the results of the inventive blown films with the results of the blown films of the state of the art, is, that only the inventive films fulfil the above given equation whereas the comparative films do not (see Figure 5). Further information concerning the exact evaluation of the equation can be deducted from the example section.

Accordingly, rather low values of the above stated equation, i.e. values of not more than 92, indicate that the inventive film has a good stiffness and can be simultaneous easily sealed by rather low temperatures (note, that the sum of SIT and $E_{IM}$ is strongly influenced by SIT as the $E_{IM}$-values are multiplied by 0.03). Thus it is preferred that the sum of the heat sealing initiation temperature (SIT) and the tensile modulus ($E_{IM}$) as defined above is not more than 91. In a preferred embodiment, where the blown film comprises a polypropylene copolymer, i.e. a multi-branched polypropylene copolymer, as defined in the present invention the sum of SIT and $E_{IM}$ as defined above shall not exceed 90.5. In another preferred embodiment, where the blown film comprises a polypropylene homopolymer, i.e. a multi-branched polypropylene homopolymer, as defined in the present invention the sum of SIT and $E_{IM}$ as defined above shall not exceed 90.0.

Of course it is preferred that not only the equation as defined above shall have values of not more than 92, but also that the heat sealing initiation temperature (SIT) of the blown film shall preferably not exceed a specific value, i.e. shall preferably not exceed 140 °C. The heat sealing initiation temperature (SIT) of a film is directly related to the molecular weight and the degree of branching of the polymer. Thus with a multi-branched polypropylene as described herein blown films with low heat sealing initiation temperatures (SIT) by a rather high stiffness can be achieved. Accordingly it is preferred that the heat sealing temperatures of the blown film is not higher than 140 °C, still more preferred not higher than 138 °C and yet more preferred not higher than 135 °C. In particular it is preferred that the heat sealing initiation temperatures (SIT) of the blown film and/or the polypropylene of said film is not higher than 140 °C, still more preferred not higher than 138 °C and yet more preferred not higher than 135 °C in case the polypropylene is a propylene homopolymer, i.e. a multi-branched propylene homopolymer, as defined in the present invention. In case the polypropylene in the blown film is a propylene copolymer, i.e. a multi-branched propylene copolymer, as defined in the present invention, it is preferred that the heat sealing initiation temperatures (SIT) of the blown film and/or the polypropylene of said film is not higher than 120 °C, still more preferred not higher than 118 °C and yet more preferred not higher than 114 °C.

The measuring method for the heat sealing initiation temperature (SIT) is defined in the example section.

On the other hand the tensile modulus ($E_{IM}$) shall be preferably rather high. Thus it is preferred that the tensile modulus ($E_{IM}$) of the blown film and/or the polypropylene of said film in an injection-molded state is at least 1300 MPa, more preferably at least 1400 MPa in case the polypropylene is a propylene homopolymer, i.e. a multi-branched propylene homopolymer, as defined in the present invention. In case the polypropylene in the blown film is a propylene copolymer, i.e. a multi-branched propylene copolymer, as defined in the present invention, it is preferred that the tensile modulus ($E_{IM}$) of blown film and/or the polypropylene of said film in an injection-molded state is at least 550 MPa, more preferably at least 650 MPa.

Moreover, the tensile modulus of the blown film itself shall be rather high. Thus it is preferred that the tensile modulus of the blown film based on a propylene homopolymer shall be at least 750 MPa, more preferably at least 800 MPa.

The heat sealing initiation temperature (SIT) of polymers can be lowered by rather high amount of extractables. However, extractables are undesirable in the field of food packaging or in the field of medical packaging. Thus it is preferred that the low heat sealing initiation temperature (SIT) values of the blown film are not achieved by adding any plasticizer and/or by using a polypropylene with rather high amounts of comonomers, in particular rather high amounts of ethylene. Thus it is preferred that the comonomer content, preferably the ethylene content, in the polypropylene and/or in the blown film does not exceed 10 mol%, more preferably does not exceed 8 mol%, yet more preferably does not exceed 6 mol%. It is in particular preferred that the polypropylene is a propylene homopolymer as defined below. In addition it is preferred that the blown film does not comprise any plasticizer in detectable amounts.

In a third aspect of this invention the blown film comprises a polypropylene wherein the film is **characterized**

**in that**

a) the heat sealing initiation temperature (SIT) of said film together with the tensile modulus ($E_{IM}$) of said film in an injection-molded state measured according to ISO 527-2 (at a speed of 1 mm/min); and/or
b) the heat sealing initiation temperature (SIT) of said film together with the tensile modulus ($E_{IM}$) of the polypropylene of said film in an injection-molded state measured according to ISO 527-2 (at a speed of 1 mm/min) fulfil(s) the equation

$$SIT\ [°C] - 0.03 \cdot E_{IM}\ [MPa] \leq 92.$$

Surprisingly, it has been found that blown films with such characteristics have superior properties compared to the films known in the art. Especially, the melt of the film in the extrusion process has a high stability, i.e. the extrusion line can be operated at a high screw speed (see Figure 6). In addition the inventive blown film is characterized by a rather high stiffness at a low heat sealing initiation temperature (SIT) in comparison to polymers being sate of the art. Moreover the inventive blown films are characterized by good optical properties.

The above given equation is the result of the finding of the present invention, that blown films based on polypropylene, i.e. the multi-branching polypropylene, as defined above and further defined below can be provided which have surprisingly a high stiffness even though the sealing temperature of said films is rather low. Such results are preferably obtained with a multi-branching propylene homopolymer (as further defined below) as well as with the multi-branching polypropylene copolymers (as further defined below), which comprise low amounts of comonomers, more preferably low amounts of ethylene, i.e. lower than 10 mol%. The above given equation (linear equation) is the result of the following tests: Different inventive blown films are produced varying only in the ethylene content (preferably between 0 to 10 mol%) of the polypropylene, i.e. the multi-branching polypropylene, comprised in said blown films. From said blown films the heat sealing initiation temperature (SIT) [˚C] has been measured according to the method described in the example section. Moreover the tensile modules ($E_{IM}$) [MPa] of the different polypropylenes used in said blown films in an injection-molded state has been also determined (ISO 527-2 (at a speed of 1 mm/min)). The measured tensile modulus ($E_{IM}$) values [MPa] are plotted against the measured heat sealing initiation temperature (SIT) values [˚C] and thereby - after a linear fit according to the least square method - resulting in a linear relationship, i.e. a linear equation. Exactly the same procedure is undertaken with blown films which are state of the art, namely with blown films based on polypropylene produced in the present of a Ziegler-Natta-catalyst. Said polypropylenes are either propylene homopolymers or polypropylene copolymers, which comprise low amounts of ethylene, i.e. lower than 10 mol%. The properties of said blown films are determined, i.e. the heat sealing initiation temperature (SIT) [˚C] as well as the tensile modules ($E_{IM}$) [MPa] of the different polypropylenes used in the known blown films in a injection-molded state has been determined (ISO 527-2 (at a speed of 1 mm/min)). The tensile modulus ($E_{IM}$) values [MPa] so obtained are plotted against the heat sealing initiation temperature (SIT) values [˚C] and thereby - after a linear fit according to the least square method - resulting in a linear relationship, i.e. a linear equation. What can be observed, when comparing the results of the inventive blown films with the results of the blown films of the state of the art, is, that only the inventive films fulfil the above given equation whereas the comparative films do not (see Figure 5). Further information concerning the exact evaluation of the equation can be deducted from the example section.

Accordingly, rather low values of the above stated equation, i.e. values of not more than 92, indicate that the inventive film has a good stiffness and can be simultaneous easily sealed by rather low temperatures (note, that the sum of SIT and $E_{IM}$ is strongly influenced by SIT as the $E_{IM}$-values are multiplied by 0.03). Thus it is preferred that the sum of the heat sealing initiation temperature (SIT) and the tensile modulus ($E_{IM}$) as defined above is not more than 91. In a preferred embodiment, where the blown film comprises a polypropylene copolymer, i.e. a multi-branched polypropylene copolymer, as defined in the present invention the sum of SIT and $E_{IM}$ as defined above shall not exceed 90.5. In another preferred embodiment, where the blown film comprises a polypropylene homopolymer, i.e. a multi-branched polypropylene homopolymer, as defined in the present invention the sum of SIT and $E_{IM}$ as defined above shall not exceed 90.0.

Of course it is preferred that not only the equation as defined above shall have values of not more than 92, but also that the heat sealing initiation temperature (SIT) of the blown film shall preferably not exceed a specific value, i.e. shall preferably not exceed 140 ˚C. The heat sealing initiation temperature (SIT) of a film is directly related to the molecular weight and the degree of branching of the polymer. Thus with a multi-branched polypropylene as described herein blown films with low heat sealing initiation temperatures (SIT) by a rather high stiffness can be achieved. Accordingly it is preferred that the heat sealing temperatures of the blown film is not higher than 140 ˚C, still more preferred not higher than 138 ˚C and yet more preferred not higher than 135 ˚C. In particular it is preferred that the heat sealing initiation temperatures (SIT) of the blown film and/or the polypropylene of said film is not higher than 140 ˚C, still more preferred not higher than 138 ˚C and yet more preferred not higher than 135 ˚C in case the polypropylene is a propylene homopolymer, i.e. a multi-branched propylene homopolymer, as defined in the present invention. In case the polypropylene in the blown film is a propylene copolymer, i.e. a multi-branched propylene copolymer, as defined in the present invention, it is preferred that the heat sealing initiation temperatures (SIT) of the blown film and/or the polypropylene of said film is not higher than 120 °C, still more preferred not higher than 118 °C and yet more preferred not higher than 114°C.

The measuring method for the heat sealing initiation temperature (SIT) is defined in the example section.

On the other hand the tensile modulus ($E_{IM}$) shall be preferably rather high. Thus it is preferred that the tensile modulus ($E_{IM}$) of the blown film and/or the polypropylene of said film in an injection-molded state is at least 1300 MPa, more preferably at least 1400 MPa in case the polypropylene is a propylene homopolymer, i.e. a multi-branched propylene homopolymer, as defined in the present invention. In case the polypropylene in the blown film is a propylene copolymer, i.e. a multi-branched propylene copolymer, as defined in the present invention, it is preferred that the tensile modulus ($E_{IM}$) of blown film and/or the polypropylene of said film in an injection-molded state is at least 550 MPa, more preferably at least 650 MPa.

Moreover, the tensile modulus of the blown film itself shall be rather high. Thus it is preferred that the tensile modulus of the blown film based on a propylene homopolymer shall be at least 750 MPa, more preferably at least 800 MPa.

The heat sealing initiation temperature (SIT) of polymers can be lowered by rather high amount of extractables. However extractables are undesirable in the field of food packaging or in the field of medical packaging. Thus it is preferred that the low heat sealing initiation temperature (SIT) values of the blown film are not achieved by adding any plasticizer and/or by using a polypropylene with rather high amounts of comonomers, in particular rather high amounts of ethylene. Thus it is preferred that the comonomer content, preferably the ethylene content, in the polypropylene and/or in the blown film does not exceed 10 mol%, more preferably does not exceed 8 mol%, yet more preferably does not exceed 6 mol%. It is in particular preferred that the polypropylene is a propylene homopolymer as defined below. In addition it is preferred that the blown film does not comprise any plasticizer in detectable amounts.

In addition it is preferred that the inventive blown film and/or the polypropylene of said blown film has (have) a strain rate thickening which means that the strain hardening increases with extension rates. A strain hardening index (SHI) can be determined at different strain rates. A strain hardening index (SHI) is defined as the slope of the tensile stress growth function $\eta_E^+$ as function of the Hencky strain $\varepsilon$ on a logarithmic scale between 1.00 and 3.00 at a at a temperature of 180 °C, where a SHI@0.1s$^{-1}$ is determined with a deformation rate $\dot{\varepsilon}_H$ of 0.10 s$^{-1}$, a SHI@0.3s$^{-1}$ is determined with a deformation rate $\dot{\varepsilon}_H$ of 0.30 s$^{-1}$, a SHI@3s$^{-1}$ is determined with a deformation rate $\dot{\varepsilon}_H$ of 3.00 s$^{-1}$. a SHI@10s$^{-1}$ is determined with a deformation rate $\dot{\varepsilon}_H$ of 10.0 s$^{-1}$. In comparing the strain hardening index at those five strain rates $\dot{\varepsilon}_H$ of 0.10, 0.30, 1.0, 3.0 and 10.00 s$^{-1}$, the slope of the strain hardening index (SHI) as function of the logarithm to the basis 10 of $\dot{\varepsilon}_H$, lg ($\dot{\varepsilon}_H$), is a characteristic measure for multi -branching. Therefore, a multi-branching index (MBI) is defined as the slope of the strain hardening index (SHI as a function of lg ($\dot{\varepsilon}_H$), i.e. the slope of a linear fitting curve of the strain hardening index (SHI) versus lg ($\dot{\varepsilon}_H$) applying the least square method, preferably the strain hardening index (SHI) is defined at deformation rates $\dot{\varepsilon}_H$ between 0.05 s$^{-1}$ and 20.0 s$^{-1}$, more preferably between 0.10 s$^{-1}$ and 10.0 s$^{-1}$, still more preferably at the deformations rates 0.10, 0.30, 1.00, 3.00 and 10.00 s$^{-1}$.Yet more preferably the SHI-values determined by the deformations rates 0.10, 0.30, 1.00, 3.00 and 10.00 s$^{-1}$ are used for the linear fit according to the least square method when establishing the multi-branching index (MBI).

Hence, it is preferred that the blown film and/or the polypropylene of said blown film has (have) a multi-branching index (MBI) of at least 0.15, more preferably of at least 0.20, and still more preferred of at least 0.30.

Hence, the blown film and/or the polypropylene component of the inventive film according to the present invention is (are) characterized in particular by extensional melt flow properties. The extensional flow, or deformation that involves the stretching of a viscous material, is the dominant type of deformation in converging and squeezing flows that occur in typical polymer processing operations. Extensional melt flow measurements are particularly useful in polymer characterization because they are very sensitive to the molecular structure of the polymeric system being tested. When the true strain rate of extension, also referred to as the Hencky strain rate, is constant, simple extension is said to be a "strong flow" in the sense that it can generate a much higher degree of molecular orientation and stretching than flows in simple shear. As a consequence, extensional flows are very sensitive to crystallinity and macro-structural effects, such as long-chain branching, and as such can be far more descriptive with regard to polymer characterization than other types of bulk rheological measurement which apply shear flow.

As mentioned above, the multi-branching index (MBI) is defined as the slope of the strain hardening index (SHI) as a function of lg ($d\varepsilon/dt$)

[d SHI/d lg ($d\varepsilon/dt$)].

Accordingly, the inventive blown film and/or the polypropylene of said film is (are) preferably characterized by the fact that their strain hardening index (SHI) increases with the deformation rate $\dot{\varepsilon}_H$, i.e. a phenomenon which is not observed in other polypropylenes. Single branched polymer types (so called Y polymers having a backbone with a single long side-chain and an architecture which resembles a "Y") or H-branched polymer types (two polymer chains coupled with a bridging group and a architecture which resemble an "H") as well as linear or short chain branched polymers do not show such a relationship, i.e. the strain hardening index (SHI) is not influenced by the deformation rate (see Figures 2 and 3). Accordingly, the strain hardening index (SHI) of known polymers, in particular known polypropylenes and polyethylenes, does not increase or increases only negligible with increase of the deformation rate (*dε/dt*). Industrial conversion processes which imply elongational flow operate at very fast extension rates. Hence the advantage of a material which shows more pronounced strain hardening (measured by the strain hardening index (SHI)) at high strain rates becomes obvious. The faster the material is stretched, the higher the strain hardening index (SHI) and hence the more stable the material will be in conversion. Especially in the fast extrusion process, like in the blow film extrusion process, the melt of the multi-branched polypropylenes has a high stability. Moreover the inventive blown films are characterized by a rather high stiffness even though the sealing temperatures are low.

A further preferred requirement is that the strain hardening index (SHI@1$s^{-1}$) of the blown film and/or the polypropylene of said film shall be at least 0.30, more preferred of at least 0.40, still more preferred of at least 0.50.

The strain hardening index (SHI) is a measure for the strain hardening behavior of the polymer melt, in particular of the polypropylene melt. In the present invention, the strain hardening index (SHI@1$s^{-1}$) has been measured by a deformation rate (*dε/dt*) of 1.00 $s^{-1}$ at a temperature of 180 °C for determining the strain hardening behavior, wherein the strain hardening index (SHI) is defined as the slope of the tensile stress growth function $\eta_E^+$ as a function of the Hencky strain ε on a logarithmic scale between 1.00 and 3.00 (see figure 1). Thereby the Hencky strain ε is defined by the formula $\varepsilon = \dot{\varepsilon}_H \cdot t$, wherein
the Hencky strain rate $\dot{\varepsilon}_H$ is defined by the formula

$$\dot{\varepsilon}_H = \frac{2 \cdot \Omega \cdot R}{L_0} \; [s^{-1}]$$

with
"$L_0$" is the fixed, unsupported length of the specimen sample being stretched which is equal to the centerline distance between the master and slave drums,
"R" is the radius of the equi-dimensional windup drums, and
"Ω" is a constant drive shaft rotation rate.

In turn the tensile stress growth function $\eta_E^+$ is defined by the formula

$$\eta_E^+(\varepsilon) = \frac{F(\varepsilon)}{\dot{\varepsilon}_H \cdot A(\varepsilon)}$$

with

$$T(\varepsilon) = 2 \cdot R \cdot F(\varepsilon)$$

and

$$A(\varepsilon) = A_0 \cdot \left(\frac{d_S}{d_M}\right)^{2/3} \cdot \exp(-\varepsilon)$$

wherein
the Hencky strain rate $\dot{\varepsilon}_H$ is defined as for the Hencky strain ε
"F" is the tangential stretching force
"R" is the radius of the equi-dimensional windup drums
"T" is the measured torque signal, related to the tangential stretching force "F"
"A" is the instantaneous cross-sectional area of a stretched molten specimen
"$A_0$" is the cross-sectional area of the specimen in the solid state (i.e. prior to melting),
"$d_s$" is the solid state density and
"$d_M$" the melt density of the polymer.

In addition, it is preferred that the branching index g' of the inventive polypropylene of the blown film shall be less than 1.00, more preferably less than 0.90, still more preferably less than 0.80. In the preferred embodiment, the branching index g' shall be less than 0.75, i.e. 0.70 or less. On the other hand it is preferred that the branching index g' is more than 0.6, still more preferably 0.7 or more. Thus it is preferred that the branching index g' of the polypropylene is in the range of 0.6 to below 1.0, more preferred in the range of more than 0.65 to 0.95, still more preferred in the range of 0.7 to 0.95. The branching index g' defines the degree of branching and correlates with the amount of branches of a polymer. The branching index g' is defined as $g'=[IV]_{br}/[IV]_{lin}$ in which g' is the branching index, $[IV_{br}]$ is the intrinsic viscosity of the branched polypropylene and [IV]lin is the intrinsic viscosity of the linear polypropylene having the same weight average molecular weight (within a range of $\pm$ 10 %) as the branched polypropylene. Thereby, a low g'-value is an indicator for a high branched polymer. In other words, if the g'-value decreases, the branching of the polypropylene increases. Reference is made in this context to B.H. Zimm and W.H. Stockmeyer, J. Chem. Phys. 17,1301 (1949). This document is herewith included by reference.

When measured on the blown film, the branching index g' is preferably of less than 1.00, more preferably less than 0.90, still more preferably less than 0.80. In the preferred embodiment, the branching index g' of the blown film shall be less than 0.75, i.e. 0.7 or less.

The intrinsic viscosity needed for determining the branching index g' is measured according to DIN ISO 1628/1, October 1999 (in Decalin at 135°C).

For further information concerning the measuring methods applied to obtain the relevant data for the a multi-branching index (MBI), the tensile stress growth function $\eta_E^+$, the Hencky strain rate $\dot{\varepsilon}_H$, the Hencky strain $\varepsilon$ and the branching index g' it is referred to the example section.

It is in particular preferred that the inventive blown film and/or the polypropylene of said film has (have) a branching index g' of less than 1.00, a strain hardening index ($SHI@1s^{-1}$) of at least 0.30 and multi-branching index (MBI) of at least 0.15. Still more preferred the inventive blown film and/or the polypropylene of said film has (have) a branching index g' of less than 0.80, a strain hardening index ($SHI@1s^{-1}$) of at least 0.40 and multi-branching index (MBI) of at least 0.15. In another preferred embodiment the inventive blown film and/or the polypropylene of said film has (have) a branching index g' of less than 1.00, a strain hardening index ($SHI@1s^{-1}$) of at least 0.30 and multi-branching index (MBI) of at least 020. In still another preferred embodiment the inventive blown film and/or the polypropylene of said film has (have) a branching index g' of less than 0.80, a strain hardening index ($SHI@1s^{-1}$) of at least 0.40 and multi-branching index (MBI) of at least 020. In yet another preferred embodiment the inventive blown film and/or the polypropylene of said film has (have) a branching index g' of less than 0.80, a strain hardening index ($SHI@1s^{-1}$) of at least 0.50 and multi-branching index (MBI) of at least 030.

Preferably the blown film according to the third embodiment is free of polyethylene, even more preferred the blown film comprises a polypropylene as defined above and further defined below as the only polymer component.

The further features mentioned below apply to all embodiments described above, i.e. the first, the second and the third embodiment as defined above.

Preferably the polypropylene used for the blown film shall be not cross-linked as it is commonly done to improve the process properties of the polypropylene. However the cross-linking is detrimental in many aspects. Inter alia the manufacture of said products is difficult to obtain.

Moreover it is preferred, that blown film according to the instant invention is further **characterized in that** the blown film has only gels with a diameter of equal or less than 500 $\mu$m, i.e. no gels with a diameter of more than 500 $\mu$m are present in said film, and wherein said gels are not more than 100 gels per square meter (sqm), more preferably not more than 80 gels per square meter (sqm), and yet more preferably not more than 60 gels per square meter (sqm). In yet another preferred embodiment the blown film has only gels with a diameter of equal or less than 400 $\mu$m, i.e. no gels with a diameter of more than 500 $\mu$m are present in said film, and wherein said gels are not more than 100 gels per square meter (sqm), more preferably not more than 80 gels per square meter (sqm), and yet more preferably not more than 60 gels per square meter (sqm). In still yet another preferred embodiment the blown film has only gels with a diameter of equal or less than 300 $\mu$m, i.e. no gels with a diameter of more than 500 $\mu$m are present in said film, and wherein said gels are not more than 100 gels per square meter (sqm), more preferably not more than 80 gels per square meter (sqm), and yet more preferably not more than 60 gels per square meter (sqm).

Furthermore, it is preferred that the polypropylene has a melt flow rate (MFR) given in a specific range. The melt flow rate mainly depends on the average molecular weight. This is due to the fact that long molecules render the material a lower flow tendency than short molecules. An increase in molecular weight means a decrease in the MFR-value. The melt flow rate (MFR) is measured in g/10 min of the polymer discharged through a defined dye under specified temperature and pressure conditions and the measure of viscosity of the polymer which, in turn, for each type of polymer is mainly influenced by its molecular weight but also by its degree of branching. The melt flow rate measured under a load of 2.16 kg at 230 °C (ISO 1133) is denoted as $MFR_2$. Accordingly, it is preferred that in the present invention the polypropylene has an $MFR_2$ in a range of 0.01 to 1000.00 g/10 min, more preferably of 0.01 to 100.00 g/10 min, still more preferred of 0.05 to 50 g/10 min. In a preferred embodiment, the MFR is in a range of 1.00 to 11.00 g/10 min. In another preferred embodiment, the MFR is in a range of 3.00 to 11.00 g/10 min.

The number average molecular weight (Mn) is an average molecular weight of a polymer expressed as the first moment of a plot of the number of molecules in each molecular weight range against the molecular weight. In effect, this is the total molecular weight of all molecules divided by the number of molecules. In turn, the weight average molecular weight (Mw) is the first moment of a plot of the weight of polymer in each molecular weight range against molecular weight.

The number average molecular weight (Mn) and the weight average molecular weight (Mw) as well as the molecular weight distribution are determined by size exclusion chromatography (SEC) using Waters Alliance GPCV 2000 instrument with online viscometer. The oven temperature is 140 ˚C. Trichlorobenzene is used as a solvent.

It is preferred that the polypropylene has a weight average molecular weight (Mw) from 10,000 to 2,000,000 g/mol, more preferably from 20,000 to 1,500,000 g/mol.

More preferably, the polypropylene of the instant invention is isotactic. Thus the polypropylene according to this invention shall have a rather high pentade concentration, i.e. higher than 90 %, more preferably higher than 92 % and most preferably higher than 93 %. In another preferred embodiment the pentade concentration is higher than 95 %. The pentade concentration is an indicator for the narrowness in the stereoregularity distribution of the polypropylene.

In addition, it is preferred that the polypropylene has a melting temperature Tm of higher than 120 ˚C. It is in particular preferred that the melting temperature is higher than 120 ˚C if the polypropylene is a polypropylene copolymer as defined below. In turn, in case the polypropylene is a polypropylene homopolymer as defined below, it is preferred, that polypropylene has a melting temperature of higher than 140 ˚C, more preferred higher than 145 ˚C.

Not only the polypropylene itself but also the blown film itself shall preferably not exceed a specific temperature. Hence it is preferred that the blown film has a melting temperature Tm of higher than 120 ˚C. It is in particular preferred that the melting temperature of the blown film is higher than 120 ˚C, more preferably higher than 130 ˚C, and yet more preferred higher than 135 ˚C, in case the polypropylene is a propylene copolymer as defined in the present invention. In turn the polypropylene is a propylene homopolymer as defined in the present invention, it is preferred that the melting temperature of the blown film is higher than 140 ˚C, more preferably higher than 150 ˚C, and yet more preferably higher than 155 ˚C.

Furthermore, as the inventive blown film shall be preferably used for food and/or medical packaging the amount of solubles shall be rather low. Accordingly the amount of xylene solubles of the blown film shall be preferably less than 2.00 wt.-%, more preferably less than 1.00 wt.-% and still more preferably less than 0.80 wt.-%.

Xylene solubles are the part of the polymer soluble in cold xylene determined by dissolution in boiling xylene and letting the insoluble part crystallize from the cooling solution (for the method see below in the experimental part). The xylene solubles fraction contains polymer chains of low stereo-regularity and is an indication for the amount of non-crystalline areas.

In a preferred embodiment the polypropylene as defined above (and further defined below) is preferably unimodal. In another preferred embodiment the polypropylene as defined above (and further defined below) is preferably multimodal, more preferably bimodal.

"Multimodal" or "multimodal distribution" describes a frequency distribution that has several relative maxima. In particular, the expression "modality of a polymer" refers to the form of its molecular weight distribution (MWD) curve, i.e. the appearance of the graph of the polymer weight fraction as a function of its molecular weight. If the polymer is produced in the sequential step process, i.e. by utilizing reactors coupled in series, and using different conditions in each reactor, the different polymer fractions produced in the different reactors each have their own molecular weight distribution which may considerably differ from one another. The molecular weight distribution curve of the resulting final polymer can be seen at a super-imposing of the molecular weight distribution curves of the polymer fraction which will, accordingly, show a more distinct maxima, or at least be distinctively broadened compared with the curves for individual fractions.

A polymer showing such molecular weight distribution curve is called bimodal or multimodal, respectively.

In case the polypropylene of the blown film is not unimodal it is preferably bimodal.

The polypropylene according to this invention can be homopolymer or a copolymer. Accordingly, the homopolymer as well as the copolymer can be a multimodal, polymer composition.

The expression homopolymer used herein relates to a polypropylene that consists substantially, i.e. of at least 97 wt%, preferably of at least 99 wt%, and most preferably of at least 99.8 wt% of propylene units. In a preferred embodiment only propylene units in the polypropylene homopolymer are detectable. The comonomer content can be determined with FT infrared spectroscopy, as described below in the examples.

In case the polypropylene used for the preparation of the blown film is a propylene copolymer, it is preferred that the comonomer is ethylene. However, also other comonomers known in the art are suitable. Preferably, the total amount of comonomer, more preferably ethylene, in the propylene copolymer is up to 10 mol%, more preferably up to 8 mol%, and even more preferably up to 6 mol%.

In a preferred embodiment, the polypropylene is a propylene copolymer comprising a polypropylene matrix and an ethylene-propylene rubber (EPR).

The polypropylene matrix can be a homopolymer or a copolymer, more preferably multimodal, i.e. bimodal, homopolymer or a multimodal, i.e. bimodal, copolymer. In case the polypropylene matrix is a propylene copolymer, then it is preferred that the comonomer is ethylene or butene. However, also other comonomers known in the art are suitable. The preferred amount of comonomer, more preferably ethylene, in the polypropylene matrix is up to 8.00 Mol%. In case the propylene copolymer matrix has ethylene as the comonomer component, it is in particular preferred that the amount of ethylene in the matrix is up to 8.00 Mol%, more preferably less than 6.00 Mol%. In case the propylene copolymer matrix has butene as the comonomer component, it is in particular preferred that the amount of butene in the matrix is up to 6.00 Mol%, more preferably less than 4.00 Mol%.

Preferably, the ethylene-propylene rubber (EPR) in the total propylene copolymer is less than or equal 50 wt%, more preferably less than or equal 40 wt%. Yet more preferably the amount of ethylene-propylene rubber (EPR) in the total propylene copolymer is in the range of 10 to 50 wt%, still more preferably in the range of 10 to 40 wt%.

In addition, it is preferred that the polypropylene being a copolymer comprising a polypropylene matrix and an ethylene-propylene rubber (EPR) has an ethylene-propylene rubber (EPR) with an ethylene-content of up to 50 wt%.

In addition, it is preferred that the polypropylene as defined above is produced in the presence of the catalyst as defined below. Furthermore, for the production of the polypropylene of the inventive blown film as defined above, the process as stated below is preferably used.

Preferably a metallocene catalyst is used for the polypropylene of the coated extrusion film.

It is in particular preferred that the polypropylene according to this invention is obtainable by a new catalyst system. This new catalyst system comprises an asymmetric catalyst, whereby the catalyst system has a porosity of less than 1.40 ml/g, more preferably less than 1.30 ml/g and most preferably less than 1.00 ml/g. The porosity has been measured according to DIN 66135 ($N_2$). In another preferred embodiment the porosity is not detectable when determined with the method applied according to DIN 66135 ($N_2$).

An asymmetric catalyst according to this invention is a metallocene compound comprising at least two organic ligands which differ in their chemical structure. More preferably the asymmetric catalyst according to this invention is a metallocene compound comprising at least two organic ligands which differ in their chemical structure and the metallocene compound is free of $C_2$-symmetry and/or any higher symmetry. Preferably the asymetric metallocene compound comprises only two different organic ligands, still more preferably comprises only two organic ligands which are different and linked via a bridge.

Said asymmetric catalyst is preferably a single site catalyst (SSC).

Due to the use of the catalyst system with a very low porosity comprising an asymmetric catalyst the manufacture of the above defined multi-branched polypropylene is possible.

Furthermore it is preferred, that the catalyst system has a surface area of less than 25 $m^2$/g, yet more preferred less than 20 $m^2$/g, still more preferred less than 15 $m^2$/g, yet still less than 10 $m^2$/g and most preferred less than 5 $m^2$/g. The surface area according to this invention is measured according to ISO 9277 ($N_2$).

It is in particular preferred that the catalytic system according to this invention comprises an asymmetric catalyst, i.e. a catalyst as defined below, and has porosity not detectable when applying the method according to DIN 66135 ($N_2$) and has a surface area measured according to ISO 9277 ($N_2$) less than 5 $m^2$/g.

Preferably the asymmetric catalyst compound, i.e. the asymetric metallocene, has the formula (I):

$$(Cp)_2R_zMX_2 \qquad (I)$$

wherein
z is 0 or 1,
M is Zr, Hf or Ti, more preferably Zr, and
X is independently a monovalent anionic ligand, such as σ-ligand
R is a bridging group linking the two Cp ligands
Cp is an organic ligand selected from the group consisting of unsubstituted cyclopenadienyl, unsubstituted indenyl, unsubstituted tetrahydroindenyl, unsubstituted fluorenyl, substituted cyclopenadienyl, substituted indenyl, substituted tetrahydroindenyl, and substituted fluorenyl,
with the proviso that both Cp-ligands are selected from the above stated group and both Cp-ligands have a different chemical structure.

The term "σ-ligand" is understood in the whole description in a known manner, i.e. a group bonded to the metal at one or more places via a sigma bond. A preferred monovalent anionic ligand is halogen, in particular chlorine (Cl).

Preferably, the asymmetric catalyst is of formula (I) indicated above,
wherein
M is Zr and
each X is Cl.

Preferably both identical Cp-ligands are substituted.

Preferably both Cp-ligands have different residues to obtain an asymmetric structure.

Preferably, both Cp-ligands are selected from the group consisting of substituted cyclopenadienyl-ring, substituted indenyl-ring, substituted tetrahydroindenyl-ring, and substituted fluorenyl-ring wherein the Cp-ligands differ in the substituents bonded to the rings.

The optional one or more substituent(s) bonded to cyclopenadienyl, indenyl, tetrahydroindenyl, or fluorenyl may be independently selected from a group including halogen, hydrocarbyl (e.g. $C_1$-$C_{20}$-alkyl, $C_2$-$C_{20}$-alkenyl, $C_2$-$C_{20}$-alkynyl, $C_3$-$C_{12}$-cycloalkyl, $C_6$-$C_{20}$-aryl or $C_7$-$C_{20}$-arylalkyl), $C_3$-$C_{12}$-cycloalkyl which contains 1, 2, 3 or 4 heteroatom(s) in the ring moiety, $C_6$-$C_{20}$-heteroaryl, $C_1$-$C_{20}$-haloalkyl, $-SiR''_3$, $-OSiR''_3$, -SR", $-PR''_2$ and $-NR''_2$, wherein each R" is independently a hydrogen or hydrocarbyl, e.g. $C_1$-$C_{20}$-alkyl, $C_2$-$C_{20}$-alkenyl, $C_2$-$C_{20}$-alkynyl, $C_3$-$C_{12}$-cycloalkyl or $C_6$-$C_{20}$-aryl.

More preferably both Cp-ligands are indenyl moieties wherein each indenyl moiety bear one or two substituents as defined above. More preferably each Cp-ligand is an indenyl moiety bearing two substituents as defined above, with the proviso that the substituents are chosen in such are manner that both Cp-ligands are of different chemical structure, i.e both Cp-ligands differ at least in one substituent bonded to the indenyl moiety, in particular differ in the substituent bonded to the five member ring of the indenyl moiety.

Still more preferably both Cp are indenyl moieties wherein the indenyl moieties comprise at least at the five membered ring of the indenyl moiety, more preferably at 2-position, a substituent selected from the group consisting of alkyl, such as $C_1$-$C_6$ alkyl, e.g. methyl, ethyl, isopropyl, and trialkyloxysiloxy, wherein each alkyl is independently selected from $C_1$-$C_6$ alkyl, such as methyl or ethyl, with proviso that the indenyl moieties of both Cp must chemically differ from each other, i.e. the indenyl moieties of both Cp comprise different substituents.

Still more preferred both Cp are indenyl moieties wherein the indenyl moieties comprise at least at the six membered ring of the indenyl moiety, more preferably at 4-position, a substituent selected from the group consisting of a $C_6$-$C_{20}$ aromatic ring moiety, such as phenyl or naphthyl, preferably phenyl, which is optionally substituted with one or more substitutents, such as $C_1$-$C_6$ alkyl, and a heteroaromatic ring moiety, with proviso that the indenyl moieties of both Cp must chemically differ from each other, i.e. the indenyl moieties of both Cp comprise different substituents.

Yet more preferably both Cp are indenyl moieties wherein the indenyl moieties comprise at the five membered ring of the indenyl moiety, more preferably at 2-position, a substituent and at the six membered ring of the indenyl moiety, more preferably at 4-position, a further substituent, wherein the substituent of the five membered ring is selected from the group consisting of alkyl, such as $C_1$-$C_6$ alkyl, e.g. methyl, ethyl, isopropyl, and trialkyloxysiloxy, wherein each alkyl is independently selected from $C_1$-$C_6$ alkyl, such as methyl or ethyl, and the further substituent of the six membered ring is selected from the group consisting of a $C_6$-$C_{20}$ aromatic ring moiety, such as phenyl or naphthyl, preferably phenyl, which is optionally substituted with one or more substituents, such as $C_1$-$C_6$ alkyl, and a heteroaromatic ring moiety, with proviso that the indenyl moieties of both Cp must chemically differ from each other, i.e. the indenyl moieties of both Cp comprise different substituents. It is in particular preferred that both Cp are idenyl rings comprising two substituentes each and differ in the substituents bonded to the five membered ring of the idenyl rings.

Concerning the moiety "R" it is preferred that "R" has the formula (II)

$$-Y(R')_2- \qquad (II)$$

wherein

Y is C, Si or Ge, and

R' is $C_1$ to $C_{20}$ alkyl, $C_6$-$C_{12}$ aryl, or $C_7$-$C_{12}$ arylalkyl or trimethylsilyl.

In case both Cp-ligands of the asymmetric catalyst as defined above, in particular case of two indenyl moieties, are linked with a bridge member R, the bridge member R is typically placed at 1-position. The bridge member R may contain one or more bridge atoms selected from e.g. C, Si and/or Ge, preferably from C and/or Si. One preferable bridge R is $-Si(R')_2-$, wherein R' is selected independently from one or more of e.g. trimethylsilyl,$C_1$-$C_{10}$ alkyl, $C_1$-$C_{20}$ alkyl, such as $C_6$-$C_{12}$ aryl, or $C_7$-$C_{40}$, such as $C_7$-$C_{12}$ arylalkyl, wherein alkyl as such or as part of arylalkyl is preferably $C_1$-$C_6$ alkyl, such as ethyl or methyl, preferably methyl, and aryl is preferably phenyl. The bridge $-Si(R')_2-$is preferably e.g. -Si($C_1$-$C_6$ alkyl)$_2$-, -Si(phenyl)$_2$- or -Si($C_1$-$C_6$ alkyl)(phenyl)-, such as -Si(Me)$_2$-.

In a preferred embodiment the asymmetric catalyst, i.e. the asymetric metallocene, is defined by the formula (III)

$$(Cp)_2R_1ZrCl_2 \qquad (III)$$

wherein both Cp coordinate to M and are selected from the group consisting of unsubstituted cyclopenadienyl, unsubstituted indenyl, unsubstituted tetrahydroindenyl, unsubstituted fluorenyl, substituted cyclopenadienyl, substituted indenyl, substituted tetrahydroindenyl, and substituted fluorenyl, with the proviso that both Cp-ligands are of different chemical structure, and R is a bridging group linking two ligands L,

wherein R is defined by the formula (II)

$-Y(R')_2-$ (II)

wherein
Y is C, Si or Ge, and
R' is $C_1$ to $C_{20}$ alkyl, $C_6$-$C_{12}$ aryl, or $C_7$-$C_{12}$ arylalkyl.

More preferably the asymmetric catalyst is defined by the formula (III), wherein both Cp are selected from the group consisting of substituted cyclopenadienyl, substituted indenyl, substituted tetrahydroindenyl, and substituted fluorenyl.

Yet more preferably the asymmetric catalyst is defined by the formula (III), wherein both Cp are selected from the group consisting of substituted cyclopenadienyl, substituted indenyl, substituted tetrahydroindenyl, and substituted fluorenyl
with the proviso that both Cp-ligands differ in the substituents, i.e. the subtituents as defined above, bonded to cyclopenadienyl, indenyl, tetrahydroindenyl, or fluorenyl.

Still more preferably the asymmetric catalyst is defined by the formula (III), wherein both Cp are indenyl and both indenyl differ in one substituent, i.e. in a substiuent as defined above bonded to the five member ring of indenyl.

It is in particular preferred that the asymmetric catalyst is a non-silica supported catalyst as defined above, in particular a metallocene catalyst as defined above.

In a preferred embodiment the asymmetric catalyst is dimethylsilyl [(2-methyl-(4'-tert.butyl)-4-phenyl-indenyl)(2-isopropyl-(4'-tert.butyl)-4-phenylindenyl)]zirkonium dichloride (IUPAC: dimethylsilandiyl [(2-methyl-(4'-tert.butyl)-4-phenyl-indenyl)(2-isopropyl-(4'-tert.butyl)-4-phenylindenyl)]zirkonium dichloride). More preferred said asymmetric catalyst is not silica supported.

The above described asymmetric catalyst components are prepared according to the methods described in WO 01/48034.

It is in particular preferred that the asymmetric catalyst system is obtained by the emulsion solidification technology as described in WO 03/051934. This document is herewith included in its entirety by reference. Hence the asymmetric catalyst is preferably in the form of solid catalyst particles, obtainable by a process comprising the steps of

a) preparing a solution of one or more asymmetric catalyst components;
b) dispersing said solution in a solvent immiscible therewith to form an emulsion in which said one or more catalyst components are present in the droplets of the dispersed phase,
c) solidifying said dispersed phase to convert said droplets to solid particles and optionally recovering said particles to obtain said catalyst.

Preferably a solvent, more preferably an organic solvent, is used to form said solution. Still more preferably the organic solvent is selected from the group consisting of a linear alkane, cyclic alkane, linear alkene, cyclic alkene, aromatic hydrocarbon and halogen-containing hydrocarbon.

Moreover the immiscible solvent forming the continuous phase is an inert solvent, more preferably the immiscible solvent comprises a fluorinated organic solvent and/or a functionalized derivative thereof, still more preferably the immiscible solvent comprises a semi-, highly- or perfluorinated hydrocarbon and/or a functionalized derivative thereof. It is in particular preferred, that said immiscible solvent comprises a perfluorohydrocarbon or a functionalized derivative thereof, preferably $C_3$-$C_{30}$ perfluoroalkanes, -alkenes or - cycloalkanes, more preferred $C_4$-$C_{10}$ perfluoro-alkanes, -alkenes or -cycloalkanes, particularly preferred perfluorohexane, perfluoroheptane, perfluorooctane or perfluoro (methylcyclohexane) or a mixture thereof.

Furthermore it is preferred that the emulsion comprising said continuous phase and said dispersed phase is a bi-or multiphasic system as known in the art. An emulsifier may be used for forming the emulsion. After the formation of the emulsion system, said catalyst is formed in situ from catalyst components in said solution.

In principle, the emulsifying agent may be any suitable agent which contributes to the formation and/or stabilization of the emulsion and which does not have any adverse effect on the catalytic activity of the catalyst. The emulsifying agent may e.g. be a surfactant based on hydrocarbons optionally interrupted with (a) heteroatom(s), preferably halogenated hydrocarbons optionally having a functional group, preferably semi-, highly- or perfluorinated hydrocarbons as known in the art. Alternatively, the emulsifying agent may be prepared during the emulsion preparation, e.g. by reacting a surfactant precursor with a compound of the catalyst solution. Said surfactant precursor may be a halogenated hydrocarbon with at least one functional group, e.g. a highly fluorinated $C_1$ to $C_{30}$ alcohol, which reacts e.g. with a cocatalyst component, such as aluminoxane.

In principle any solidification method can be used for forming the solid particles from the dispersed droplets. According to one preferable embodiment the solidification is effected by a temperature change treatment. Hence the emulsion subjected to gradual temperature change of up to 10 °C/min, preferably 0.5 to 6 °C/min and more preferably 1 to 5 °C/min. Even more preferred the emulsion is subjected to a temperature change of more than 40 °C, preferably more than 50 °C within less than 10 seconds, preferably less than 6 seconds.

The recovered particles have preferably an average size range of 5 to 200 μm, more preferably 10 to 100 μm.

Moreover, the form of solidified particles have preferably a spherical shape, a predetermined particles size distribution and a surface area as mentioned above of preferably less than 25 $m^2/g$, still more preferably less than 20 $m^2/g$, yet more preferably less than 15 $m^2/g$, yet still more preferably less than 10 $m^2/g$ and most preferably less than 5 $m^2/g$, wherein said particles are obtained by the process as described above.

For further details, embodiments and examples of the continuous and dispersed phase system, emulsion formation method, emulsifying agent and solidification methods reference is made e.g. to the above cited international patent application WO 03/051934.

As mentioned above the catalyst system may further comprise an activator as a cocatalyst, as described in WO 03/051934, which is enclosed herein with reference.

Preferred as cocatalysts for metallocenes and non-metallocenes, if desired, are the aluminoxanes, in particular the $C_1$-$C_{10}$-alkylaluminoxanes, most particularly methylaluminoxane (MAO). Such aluminoxanes can be used as the sole cocatalyst or together with other cocatalyst(s). Thus besides or in addition to aluminoxanes, other cation complex forming catalysts activators can be used. Said activators are commercially available or can be prepared according to the prior art literature.

Further aluminoxane cocatalysts are described i.a. in WO 94/28034 which is incorporated herein by reference. These are linear or cyclic oligomers of having up to 40, preferably 3 to 20, -(Al(R''')O)- repeat units (wherein R''' is hydrogen, $C_1$-$C_{10}$-alkyl (preferably methyl) or $C_6$-$C_{18}$-aryl or mixtures thereof).

The use and amounts of such activators are within the skills of an expert in the field. As an example, with the boron activators, 5:1 to 1:5, preferably 2:1 to 1:2, such as 1:1, ratio of the transition metal to boron activator may be used. In case of preferred aluminoxanes, such as methylaluminumoxane (MAO), the amount of Al, provided by aluminoxane, can be chosen to provide a molar ratio of Al:transition metal e.g. in the range of 1 to 10 000, suitably 5 to 8000, preferably 10 to 7000, e.g. 100 to 4000, such as 1000 to 3000. Typically in case of solid (heterogeneous) catalyst the ratio is preferably below 500.

The quantity of cocatalyst to be employed in the catalyst of the invention is thus variable, and depends on the conditions and the particular transition metal compound chosen in a manner well known to a person skilled in the art.

Any additional components to be contained in the solution comprising the organotransition compound may be added to said solution before or, alternatively, after the dispersing step.

Furthermore, the present invention is related to the use of the above-defined catalyst system for the production of polymers, in particular of a polypropylene according to this invention.

In addition, the present invention is related to the process for producing the inventive polypropylene, whereby the catalyst system as defined above is employed. Furthermore it is preferred that the process temperature is higher than 60 °C. Preferably, the process is a multi-stage process to obtain multimodal polypropylene as defined above.

Multistage processes include also bulk/gas phase reactors known as multizone gas phase reactors for producing multimodal propylene polymer.

A preferred multistage process is a "loop-gas phase"-process, such as developed by Borealis A/S, Denmark (known as BORSTAR® technology) described e.g. in patent literature, such as in EP 0 887 379 or in WO 92/12182.

Multimodal polymers can be produced according to several processes which are described, e.g. in WO 92/12182, EP 0 887 379 and WO 97/22633.

A multimodal polypropylene according to this invention is produced preferably in a multi-stage process in a multi-stage reaction sequence as described in WO 92/12182. The contents of this document are included herein by reference.

It has previously been known to produce multimodal, in particular bimodal, polypropylene in two or more reactors connected in series, i.e. in different steps (a) and (b).

According to the present invention, the main polymerization stages are preferably carried out as a combination of a bulk polymerization/gas phase polymerization.

The bulk polymerizations are preferably performed in a so-called loop reactor.

In order to produce the multimodal polypropylene according to this invention, a flexible mode is preferred. For this reason, it is preferred that the composition be produced in two main polymerization stages in combination of loop reactor/gas phase reactor.

Optionally, and preferably, the process may also comprise a prepolymerization step in a manner known in the field and which may precede the polymerization step (a).

If desired, a further elastomeric comonomer component, so called ethylene-propylene rubber (EPR) component as defined in this invention, may be incorporated into the obtained propylene polymer to form a propylene copolymer as defined above. The ethylene-propylene rubber (EPR) component may preferably be produced after the gas phase polymerization step (b) in a subsequent second or further gas phase polymerizations using one or more gas phase reactors.

The process is preferably a continuous process.

Preferably, in the process for producing the propylene polymer as defined above the conditions for the bulk reactor of step (a) may be as follows:

- the temperature is within the range of 40 °C to 110 °C, preferably between 60 °C and 100 °C, 70 to 90 °C,
- the pressure is within the range of 20 bar to 80 bar, preferably between 30 bar to 60 bar,
- hydrogen can be added for controlling the molar mass in a manner known per se.

Subsequently, the reaction mixture from the bulk (bulk) reactor (step a) is transferred to the gas phase reactor, i.e. to step (b), whereby the conditions in step (b) are preferably as follows:

- the temperature is within the range of 50 °C to 130 °C, preferably between 60 °C and 100 °C,
- the pressure is within the range of 5 bar to 50 bar, preferably between 15 bar to 35 bar,
- hydrogen can be added for controlling the molar mass in a manner known per se.

The residence time can vary in both reactor zones. In one embodiment of the process for producing the propylene polymer the residence time in bulk reactor, e.g. loop is in the range 0.5 to 5 hours, e.g. 0.5 to 2 hours and the residence time in gas phase reactor will generally be 1 to 8 hours.

If desired, the polymerization may be effected in a known manner under supercritical conditions in the bulk, preferably loop reactor, and/or as a condensed mode in the gas phase reactor.

The process of the invention or any embodiments thereof above enable highly feasible means for producing and further tailoring the propylene polymer composition within the invention, e.g. the properties of the polymer composition can be adjusted or controlled in a known manner e.g. with one or more of the following process parameters: temperature, hydrogen feed, comonomer feed, propylene feed e.g. in the gas phase reactor, catalyst, the type and amount of an external donor (if used), split between components.

The above process enables very feasible means for obtaining the reactor-made propylene polymer as defined above.

More over the present invention is related to the manufacture of the inventive blown film by extrusion of the polypropylene as defined herein by conventional blown film extrusion, i.e. the polypropylene is extruded through a die, preferably circular die, followed by "bubble-like" expansion. The blown films according to this invention are preferably produced on a single screw extruder with a barrel diameter of 70 mm and a round-section die of 200 mm with 1mm die gap in combination with a monolip cooling ring and internal bubble cooling (IBC). Melt temperature is preferably 210 °C in the die; the temperature of the cooling air is kept preferably at 15 °C and the blow up ratio (BUR) is preferably 3:1. Moreover it is preferred that a film thickness of 40 μm is adjusted through the ratio between extruder output, takeoff speed and BUR.

Furthermore the present invention is also directed to the use of the inventive blown film, as packaging material, in particular as a packaging material for food and/or medical products.

In addition the present invention is related to articles comprising a blown film as defined herein and/or a polypropylene as defined herein.

In a further aspect the present invention is directed to the use of the inventive polypropylene as defined herein for blown films and/or articles comprising at least said blown films.

Possible articles for which the inventive blown film and/or the inventive polypropylene can be used are lamination films, general packaging films, like bread bags, pouches and medical/hygienic films.

In the following, the present invention is described by way of examples.

## Examples

### 1. Definitions/Measuring Methods

The following definitions of terms and determination methods apply for the above general description of the invention as well as to the below examples unless otherwise defined.

### A. Pentad Concentration

For the meso pentad concentration analysis, also referred herein as pentad concentration analysis, the assignment analysis is undertaken according to T Hayashi, Pentad concentration, R. Chujo and T. Asakura, Polymer 29 138-43 (1988) and Chujo R, et al., Polymer 35 339 (1994)

## B. Multi-branching Index

### 1. Acquiring the experimental data

Polymer is melted at T=180 °C and stretched with the SER Universal Testing Platform as described below at deformation rates of dε/dt=0.1 0.3 1.0 3.0 and 10 $s^{-1}$ in subsequent experiments. The method to acquire the raw data is described in Sentmanat et al., J. Rheol. 2005, Measuring the Transient Elongational Rheology of Polyethylene Melts Using the SER Universal Testing Platform.

### Experimental Setup

A Paar Physica MCR300, equipped with a TC30 temperature control unit and an oven CTT600 (convection and radiation heating) and a SERVP01-025 extensional device with temperature sensor and a software RHEOPLUS/32 v2.66 is used.

### Sample Preparation

Stabilized Pellets are compression moulded at 220°C (gel time 3min, pressure time 3 min, total moulding time 3+3=6min) in a mould at a pressure sufficient to avoid bubbles in the specimen, cooled to room temperature. From such prepared plate of 0.7mm thickness, stripes of a width of 10mm and a length of 18mm are cut.

### Check of the SER Device

Because of the low forces acting on samples stretched to thin thicknesses, any essential friction of the device would deteriorate the precision of the results and has to be avoided.
In order to make sure that the friction of the device less than a threshold of 5x10-3 mNm (Milli-Newtonmeter) which is required for precise and correct measurements, following check procedure is performed prior to each measurement:

- The device is set to test temperature (180°C) for minimum 20minutes without sample in presence of the clamps
- A standard test with 0.3s-1 is performed with the device on test temperature (180°C)
- The torque (measured in mNm) is recorded and plotted against time
- The torque must not exceed a value of 5x10-3 mNm to make sure that the friction of the device is in an acceptably low range

### Conducting the experiment

The device is heated for min. 20min to the test temperature (180°C measured with the thermocouple attached to the SER device) with clamps but without sample. Subsequently, the sample (0.7x10x18mm), prepared as described above, is clamped into the hot device. The sample is allowed to melt for 2 minutes +/- 20 seconds before the experiment is started.
During the stretching experiment under inert atmosphere (nitrogen) at constant Hencky strain rate, the torque is recorded as function of time at isothermal conditions (measured and controlled with the thermocouple attached to the SER device).
After stretching, the device is opened and the stretched film (which is winded on the drums) is inspected. Homogenous extension is required. It can be judged visually from the shape of the stretched film on the drums if the sample stretching has been homogenous or not. The tape must me wound up symmetrically on both drums, but also symmetrically in the upper and lower half of the specimen.
If symmetrical stretching is confirmed hereby, the transient elongational viscosity calculates from the recorded torque as outlined below.

### 2. Evaluation

For each of the different strain rates dε/dt applied, the resulting tensile stress growth function $\eta_E$+ (dε/dt, t) is plotted against the total Hencky strain ε to determine the strain hardening behaviour of the melt, see Figure 1.
In the range of Hencky strains between 1.0 and 3.0, the tensile stress growth function $\eta_E^+$ can be well fitted with a function

$$\eta_E^+(\dot{\varepsilon},\varepsilon) = c_1 \cdot \varepsilon^{c_2}$$

where $c_1$ and $c_2$ are fitting variables. Such derived $c_2$ is a measure for the strain hardening behavior of the melt and called Strain Hardening Index *SHI.*

Dependent on the polymer architecture, *SHI* can

- be independent of the strain rate (linear materials, Y- or H-structures)
- increase with strain rate (short chain-, hyper- or multi-branched structures).

This is illustrated in Figure 2.

For polyethylene, linear (HDPE), short-chain branched (LLDPE) and hyperbranched structures (LDPE) are well known and hence they are used to illustrate the structural analytics based on the results on extensional viscosity. They are compared with a polypropylene with Y and H-structures with regard to their change of the strain-hardening behavior as function of strain rate, see Figure 2 and Table 1.

To illustrate the determination of *SHI* at different strain rates as well as the multi-branching index (*MBI*) four polymers of known chain architecture are examined with the analytical procedure described above.

The first polymer is a H- and Y-shaped polypropylene homopolymer made according to EP 879 830 ("A") example 1 through adjusting the MFR with the amount of butadiene. It has a MFR230/2.16 of 2.0g/10min, a tensile modulus of 1950MPa and a branching index g' of 0.7.

The second polymer is a commercial hyperbranched LDPE, Borealis "B", made in a high pressure process known in the art. It has a MFR190/2.16 of 4.5 and a density of 923kg/m$^3$.

The third polymer is a short chain branched LLDPE, Borealis "C", made in a low pressure process known in the art. It has a MFR190/2.16 of 1.2 and a density of 919kg/m$^3$.

The fourth polymer is a linear HDPE, Borealis "D", made in a low pressure process known in the art. It has a MFR190/2.16 of 4.0 and a density of 954kg/m$^3$.

The four materials of known chain architecture are investigated by means of measurement of the transient elongational viscosity at 180°C at strain rates of 0.10, 0.30, 1.0, 3.0 and 10s$^{-1}$. Obtained data (transient elongational viscosity versus Hencky strain) is fitted with a function

$$\boxed{\eta_E^+ = c_1 * \varepsilon^{c_2}}$$

for each of the mentioned strain rates. The parameters c1 and c2 are found through plotting the logarithm of the transient elongational viscosity against the logarithm of the Hencky strain and performing a linear fit of this data applying the least square method. The parameter c1 calculates from the intercept of the linear fit of the data $lg(\eta_E^+)$ versus $lg(\varepsilon)$ from

$$c_1 = 10^{\text{Intercept}}$$

and $c_2$ is the strain hardening index (*SHI*) at the particular strain rate.

This procedure is done for all five strain rates and hence, SHI@0.1s$^{-1}$, SHI@0.3s$^{-1}$, SHI@1.0s$^{-1}$, SHI@3.0s$^{-1}$, SHI@10s$^{-1}$ are determined, see Figure 1 and Table 1.

**Table 1:** SHI-values

| dε/dt | lg(dε/dt) | Property | Y and H branched PP | Hyperbranched LDPE | short-chain branched LLDPE | Linear HDPE |
|---|---|---|---|---|---|---|
| | | | **A** | **B** | **C** | **D** |
| 0,1 | -1,0 | SHI@0.1s$^{-1}$ | 2,05 | - | 0,03 | 0,03 |
| 0,3 | -0,5 | SHI@0.3s$^{-1}$ | - | 1,36 | 0,08 | 0,03 |

(continued)

| dε/dt | lg(dε/dt) | Property | Y and H branched PP | Hyperbranched LDPE | short-chain branched LLDPE | Linear HDPE |
|---|---|---|---|---|---|---|
| | | | A | B | C | D |
| 1 | 0,0 | SHI@1.0s$^{-1}$ | 2,19 | 1,65 | 0,12 | 0,11 |
| 3 | 0,5 | SHI@3.0s$^{-1}$ | - | 1,82 | 0,18 | 0,01 |
| 10 | 1,0 | SHI@10s$^{-1}$ | 2,14 | 2,06 | - | - |

From the strain hardening behaviour measured by the values of the SHI@1s$^{-1}$ one can already clearly distinguish between two groups of polymers: Linear and short-chain branched have a SHI@1s$^{-1}$ significantly smaller than 0.30. In contrast, the Y and H-branched as well as hyper-branched materials have a SHI@1s$^{-1}$ significantly larger than 0.30.

In comparing the strain hardening index at those five strain rates $\dot{\varepsilon}_H$ of 0.10, 0.30, 1.0, 3.0 and 10s$^{-1}$, the slope of SHI as function of the logarithm of $\dot{\varepsilon}_H$, lg($\dot{\varepsilon}_H$) is a characteristic measure for multi -branching. Therefore, a multi-branching index (MBI) is calculated from the slope of a linear fitting curve of SHI versus lg($\dot{\varepsilon}_H$):

$$SHI(\dot{\varepsilon}_H) = \mathrm{c3} + \mathrm{MBI} * \lg(\dot{\varepsilon}_H)$$

The parameters c3 and *MBI* are found through plotting the *SHI* against the logarithm of the Hencky strain rate lg($\dot{\varepsilon}_H$) and performing a linear fit of this data applying the least square method. Please confer to Figure 2.

**Table 2:** Multi-branched-index (MBI)

| Property | Y and H branched PP | Hyperbranched LDPE | short-chain branched LLDPE | Linear HDPE |
|---|---|---|---|---|
| | A | B | C | D |
| MBI | 0,04 | 0,45 | 0,10 | 0,01 |

The multi-branching index *MBI* allows now to distinguish between Y or H-branched polymers which show a *MBI* smaller than 0.05 and hyper-branched polymers which show a *MBI* larger than 0.15. Further, it allows to distinguish between short-chain branched polymers with *MBI* larger than 0.10 and linear materials which have a *MBI* smaller than 0.10.

Similar results can be observed when comparing different polypropylenes, i.e. polypropylenes with rather high branched structures have higher SHI and MBI-values, respectively, compared to their linear counterparts. Similar to the hyper-branched polyethylenes the new developed polypropylenes show a high degree of branching. However the polypropylenes according to the instant invention are clearly distinguished in the SHI and MBI-values when compared to known hyper-branched polyethylenes. Without being bound on this theory, it is believed, that the different SHI and MBI-values are the result of a different branching architecture. For this reason the new found branched polypropylenes according to this invention are designated as multi-branched.

Combining both, strain hardening index (SHI) and multi-branching index (MBI), the chain architecture can be assessed as indicated in Table 3:

**Table 3:** Strain Hardening Index (SHI) and Multi-branching Index (MBI) for various chain architectures

| Property | Y and H branched | Hyperbranched / Multibranched | short-chain branched | linear |
|---|---|---|---|---|
| SHI@1.0s$^{-1}$ | >0.30 | >0.30 | ≤0.30 | ≤0.30 |
| MBI | ≤0.10 | >0.10 | ≤0.10 | ≤0.10 |

### C. Further Measuring Methods

**Particle size distribution:** Particle size distribution is measured via Coulter Counter LS 200 at room temperature with n-heptane as medium.

**NMR**

**NMR-spectroscopy measurements:**

The $^{13}C$-NMR spectra of polypropylenes were recorded on Bruker 400MHz spectrometer at 130 °C from samples dissolved in 1,2,4-trichlorobenzene/benzene-d6 (90/10 w/w). For the pentad analysis the assignment is done according to the methods described in literature: (T. Hayashi, Y. Inoue, R. Chüjö, and T. Asakura, Polymer 29 138-43 (1988).and Chujo R, et al,Polymer 35 339 (1994).

The NMR-measurement was used for determining the mmmm pentad concentration in a manner well known in the art.

**Number average molecular weight ($M_n$), weight average molecular weight ($M_w$) and molecular weight distribution (MWD)** are determined by size exclusion chromatography (SEC) using Waters Alliance GPCV 2000 instrument with online viscometer. The oven temperature is 140 °C. Trichlorobenzene is used as a solvent (ISO 16014). In detail: The number average molecular weight ($M_n$), the weight average molecular weight ($M_w$) and the molecular weight distribution (MWD) are measured by a method based on ISO 16014-1:2003 and ISO 16014-4:2003. A Waters Alliance GPCV 2000 instrument, equipped with refractive index detector and online viscosimeter was used with 3 x TSK-gel columns (GMHXL-HT) from TosoHaas and 1,2,4-trichlorobenzene (TCB, stabilized with 200 mg/L 2,6-Di tert butyl-4-methylphenol) as solvent at 145 °C and at a constant flow rate of 1 mL/min. 216.5 μL of sample solution were injected per analysis. The column set was calibrated using relative calibration with 19 narrow MWD polystyrene (PS) standards in the range of 0.5 kg/mol to 11 500 kg/mol and a set of well characterized broad polypropylene standards. All samples were prepared by dissolving 5 - 10 mg of polymer in 10 mL (at 160 °C) of stabilized TCB (same as mobile phase) and keeping for 3 hours with continuous shaking prior sampling in into the GPC instrument.

**The xylene solubles (XS, wt.-%):** Analysis according to the known method: 2.0 g of polymer is dissolved in 250 ml p-xylene at 135°C under agitation. After 30±2 minutes the solution is allowed to cool for 15 minutes at ambient temperature and then allowed to settle for 30 minutes at 25±0.5°C. The solution is filtered and evaporated in nitrogen flow and the residue dried under vacuum at 90 °C until constant weight is reached.

$$XS\% = (100 \times m_1 \times v_0) / (m_0 \times v_1),$$

wherein

$m_0$ = initial polymer amount (g)
$m_1$ = weight of residue (g)
$v_0$= initial volume (ml)
$V_1$ = volume of analyzed sample (ml)

**Melting temperature Tm, crystallization temperature Tc, and the degree of crystallinity:** measured with Mettler TA820 differential scanning calorimetry (DSC) on 5-10 mg samples. Both crystallization and melting curves were obtained during 10 °C/min cooling and heating scans between 30 °C and 225 °C. Melting and crystallization temperatures were taken as the peaks of endotherms and exotherms.

Also the melt- and crystallization enthalpy **(Hm and Hc)** were measured by the DSC method according to ISO 11357-3.

**Heat sealing initiation temperature (SIT):**

1. General

The method determines the sealing temperature range of polypropylene films, in particular blown films. The sealing temperature range is the temperature range, in which the films can be sealed according to conditions given below. The lower limit (heat sealing initiation temperature (SIT)) is the sealing temperature at which a sealing strength of > 5 N is achieved. The upper limit (sealing end temperature (SET)) is reached, when the films stick to the sealing device.

2. Sample geometry and sample preparation

The samples are extruded with OCS at 220 °C and taken in longitudinal direction of extrusion. The sample size is 45 mm x 170 mm, the film thickness is 50 μm.

3. Sealing Device

For sealing the laboratory sealing device KOPP SGPE-20 is used. Prior to the test, the device is checked for the parallel position of the sealing jaws.

4. Sealing parameters

The sealing parameters are set to:

| | |
|---|---|
| Sealing force: | 600 N |
| Sealing time: | 1 s |
| Sealing jaws: | 100 x 20 mm, smooth |
| Heating: | both jaws, precision +/- 1 ˚C |
| Start temperature: | 100 ˚C |

5. Sealing procedure

- Stripes are folded to 85 x 45 mm and put between the sealing jaws.
- The jaws are heated to sealing temperature
- Immediately after sealing, the sample is taken out of the device
- For each temperature, 10 samples are sealed

6. Testing

To determine the initial strength, 10 samples are sealed at one temperature setting and with KOPP SGPE-20-IMPULS tested for the sealing strength.
If the mean value of 10 tests - as described above - is > 5 N, then the heat sealing initiation temperature (SIT) is reached. If not, the sealing temperature is increased by 2 ˚C and the test is repeated.
After having reached the heat sealing initiation temperature (SIT), the sealing temperature is further increased in steps of 2 ˚C until the film sticks to the sealing jaws.
After taking the sealed film from the device, 5 minutes are waited before the film is stretched with a take-off speed of 2.5m/min to measure the sealing strength in Newton. The heat sealing initiation temperature (SIT) is the temperature where a sealing strength of > 5 N is reached. The sealing end temperature (SET) is the temperature where the film sticks to the sealing jaws.
The precision of the method is determined by the temperature steps, i.e. 2 ˚C.

**$MFR_2$:** measured according to ISO 1133 (230˚C, 2.16 kg load).

**Comonomer content** is measured with Fourier transform infrared spectroscopy (FTIR) calibrated with $^{13}$C-NMR. When measuring the ethylene content in polypropylene, a thin film of the sample (thickness about 250 mm) was prepared by hot-pressing. The area of $-CH_2-$ absorption peak (800-650 $cm^{-1}$) was measured with Perkin Elmer FTIR 1600 spectrometer. The method was calibrated by ethylene content data measured by $^{13}$C-NMR.

**Stiffness Film TD (transversal direction), Stiffness Film MD (machine direction), Elongation at break TD and Elongation at break MD:** these are determined according to ISO 527-3 (cross head speed: 1 mm/min).

**Stiffness (tensile modulus) of the injection molded samples (states)** is measured according to ISO 527-2. The modulus is measured at a speed of 1 mm/min.

**Haze and transparency:** are determined according to ASTM D1003-92 (haze).

Gels: Gels are determined by visual counting using the following equipment.

Gel Inspection System OCS

The OCS equipment is used for continuous gel determination (counting, classification and documentation) in PP films.

The equipment is assembled by the following components:

Extruder: Lab extruder ME25/5200, 3 heating zones (up to 450˚C)
Screw diameter 25, L/D 25
Die width 150 mm, die gap 0,5 mm
Chill Roll: CR8, automatic film tension regulation,
Air knife, air jet, temperature range 20˚C to 100˚C
Effective width 180 mm
Inspection System: FS-5, transmitted light principle
Gel size 50 μ to > 1000 μ
Camera resolution 4096 Pixel
50.000.000 Pixel/Second
Illumination width 100 mm

**Intrinsic viscosity:** is measured according to DIN ISO 1628/1, October 1999 (in Decalin at 135 ˚C).

**Porosity:** is measured according to DIN 66135

**Surface area:** is measured according to ISO 9277

**3. Examples**

**Example 1 (C1, comparison)**

A commercial linear Z/N Polypropylene copolymer with ethylene has an $MFR_{230/2\cdot16}$ of 1.9g/10min, a g' of 1.0, an ethylene content of 6.5 mol % and a fraction of xylene soulubles of 7.8 wt %. The material is made with the Borstar process known in the art. It has a melting temperature of 138 ˚C and a melt enthalpy of 75 J/g.

For further material properties of the polymer, please refer to Table 4.

**Example 2 (E1, inventive)**

A support-free catalyst has been prepared as described in example 5 of WO 03/051934 whilst using an asymmetric metallocene dimethylsilyl [(2-methyl-(4'-tert.butyl)-4-phenyl-indenyl)(2-isopropyl-(4'-tert.butyl)-4-phenylindenyl)] zirkonium dichloride.

Such catalyst has been used to polymerise a polypropylene copolymer with 4 mol % ethylene in the Borstar process, known in the art.

The material properties of the polymer are shown in Table 4.

**Table 4:** Material Properties of the polypropylene

| | Unit | Method | C1 | E1 |
|---|---|---|---|---|
| $MFR_{230/2\cdot1}$ | g/10min | MFR | 1,9 | 4 |
| g' | - | IV | 1.0 | 0.7 |
| SHI@0.1 | - | SER | - | 0,75 |
| SHI@0.3 | - | SER | - | 0,85 |
| SHI@1.0 | - | SER | - | 1,00 |
| SHI@3.0 | - | SER | - | 0,96 |
| SHI@10 | - | SER | - | - |
| MBI | - | SER | - | 0,16 |
| Structure | - | SER | lin | mb |
| C2 | mol% | IR | 6,5 | 4 |
| XS | % | XS | 7,8 | 0,7 |

(continued)

| | Unit | Method | C1 | E1 |
|---|---|---|---|---|
| Mw | kg/mol | GPC | 539 | 319 |
| Mn | kg/mol | GPC | 125 | 124 |
| F30 | cN | Rheotens | 12 | 10 |
| v30 | mm/s | Rheotens | 125 | 180 |
| Tm1 | ˚C | DSC | 138,0 | 130,8 |
| Hm1 | J/g | DSC | 75,3 | 60,3 |
| Tm2 | ˚C | DSC | - | 140,8 |
| Hm2 | J/g | DSC | - | 30,2 |
| Tc | ˚C | DSC | 92,7 | 106,2 |
| Hc | J/g | DSC | 71,7 | 81,8 |
| Tensile Modulus | MPa | IS0527-2 | 756,2 | 1146,7 |
| Tensile Stress At Yield | MPa | IS0527-2 | 23,8 | 30,6 |
| Tensile Strain At Yield | % | IS0527-2 | 13,5 | 9,9 |
| Tensile Strength | MPa | IS0527-2 | 27,2 | 33,5 |
| Tensile Strain At Tensile Strength | % | IS0527-2 | 459,81 | 488,48 |
| Tensile Stress At Break | MPa | IS0527-2 | 26,7 | 33,1 |
| Tensile Strain At Break | % | IS0527-2 | 462,82 | 493,21 |
| SIT | ˚C | SIT | - | 134 |
| SET | ˚C | SIT | - | 140 |
| SET-SIT | ˚C | SIT | - | 6 |
| SIT/˚C-0.03*EIM/MPa | - | SIT | - | 88,2 |

The materials have been pelletized together with additives, i.e. 1000 ppm of a commercial stabilizer Irganox B215 (supplied by Ciba), using an extruder at melt temperature of 240 ˚C.

The pelletized materials have been used for film blowing at a commercial blown-film line Alpine 35, using a barrier screw with temperature settings 180/200/220/220/220 ˚C and a initial screw speed of 60 rpm and 80 rpm, respectively. The bubble has been stretched with a blow up ratio of 2 and winded up with 10.4 m/min. Please confer to Table 4 for the settings for film blowing. Already during film making it showed that the film from E1 behaves significantly different to the known polymers. The film is much more transparent and easier to process. Its frost-line, i.e. the transition from transparent melted material to (partly) crystallized film (slightly opaque) is moved to much higher values. The frost line of C1 is observed at 180 mm whereas the frost line of E1 is at 300 mm. Also the bubble was much more stable. This indicates improved processibility already (as proven further below, see Table 8).

Final blown films show superior mechanical, optical and sealing properties as outlined in Table 6.

**Table 5:** Blown film making

| | Unit | Method | C1 | E1 |
|---|---|---|---|---|
| BF Melt Temperature @ 10.4 m/min | ˚C | Alpine 35 | 221 | 221 |
| BF Screw Speed @ 10.4 m/min | rpm | Alpine 35 | 60 | 80 |
| BF Pressure @ 10.4 m/min | bar | Alpine 35 | 61 | 29 |
| BF Frost Line @ 10.4 m/min | mm | Alpine 35 | 180 | 300 |

**Table 6:** Blown film properties

| | Unit | Method | C1 | E1 |
|---|---|---|---|---|
| GLOSS 20˚ | % | Gloss | 20,6 | 50,3 |
| HAZE | % | Haze | 13,2 | 8,5 |
| TENSILE MODULUS MD | MPa | ISO527-3 | 724 | 1185 |
| TENSILE STRESS AT YIELD MD | MPa | ISO527-3 | 24,4 | 32,5 |
| TENSILE STRAIN AT YIELD MD | % | ISO527-3 | 11,6 | 8,31 |
| TENSILE STRENGTH MD | MPa | ISO527-3 | 54,5 | 36,3 |
| TENSILE STRAIN AT STRENGTH MD | % | ISO527-3 | 574 | 407 |
| TENSILE STRESS AT BREAK MD | MPa | ISO527-3 | 54,4 | 34,6 |
| TENSILE STRAIN AT BREAKMD | % | ISO527-3 | 574 | 421 |
| TENSILE MODULUS TD | MPa | ISO527-3 | 695 | 1097 |
| TENSILE STRESS AT YIELD TD | MPa | ISO527-3 | 21,41 | 28,5 |
| TENSLE STRAIN AT YIELD TD | % | ISO527-3 | 10,3 | 6,3 |
| TENSILE STRENGTH TD | MPa | ISO527-3 | 36,2 | 28,5 |
| TENSILE STRAIN AT STRENGTH TD | % | ISO527-3 | 697,9 | 6,3 |
| TENSILE STRESS AT BREAK TD | MPa | ISO527-3 | 36,0 | 21,7 |
| TENSILE STRAIN AT BREAK TD | % | ISO527-3 | 698 | 122 |
| FMAX/THICKNESS | N/mm | Elmendorf | 829 | 742 |
| EMAX/THICKNESS | J/mm | Elmendorf | 1,98 | 1,59 |
| EGES/THICKNESS | J/mm | Elmendorf | 2,9 | 1,71 |
| RESISTANCE | N/mm | Elmendorf | 5,64 | 2,21 |
| RELATIVE TEAR RESISTANCE | N/mm | Elmendorf | 18,9 | 7,66 |

For this purpose, six polymers have been prepared. More specifically, E2, E3 and E4 are polymerised using the metallocene catalyst as described in example E1 but with varying ethylene concentrations to obtain homopolymers (E2, E3) and a copolymer (E4). Please confer to the table 7 for the polymers' properties.

Further, C2, C3 and C4 have been prepared with the same process as for C1 and using the same catalyst as described in C1 but with varying ethylene concentrations to obtain a homopolymer (C2) and two copolymers (C3, C4). Please confer to the table 7 for the polymers' properties.

For present series of polypropylene materials which vary in ethylene content one may expect a linear relationship of sealing temperature (SIT) and stiffness (E). The higher the Comonomer content, the lower the sealing temperature and the lower the stiffness. However, it shows that the inventive materials made with the catalyst of example E1 behave favourable compared to Z/N systems. At equal sealing temperatures, higher stiffness is achieved. Please confer to Figure 5.

**Table 7**: Sealing Temperature

| Material | | | mPP-H E2 | mPP-H E3 | mPP-R E4 | znPP-H C2 | znPP-R C3 | znPP-R C4 |
|---|---|---|---|---|---|---|---|---|
| C2 | mol% | IR | 0 | 0 | 6 | 0 | 5 | 6 |
| Tm | ˚C | DSC | 156,7 | 155,7 | 122,2 | 164 | 143 | 139,6 |
| $E_{IM}$ | MPa | ISO527-2 | 1528 | 1409 | 792 | 1523 | 849 | 511 |
| $E_{OCS\ Film}$ | MPa | ISO527-3 | 859 | 792 | 445 | 856 | 477 | 287 |
| SIT | ˚C | SIT | 134 | 134 | 114 | 140 | 118 | 112 |
| SET | ˚C | SIT | 140 | 140 | 124 | 144 | 122 | 120 |
| SET-SIT | ˚C | SIT | 6 | 6 | 10 | 4 | 8 | 8 |
| SIT/˚C-0.03*EIM/MPa | - | SIT | 88,2 | 91,7 | 90,2 | 94,3 | 92,5 | 96,7 |

In order to investigate the favourable film blowing properties of the blown film of E1, more comparison experiments have been conducted as outlined in Table 8. More specifically, three HMS-PP homopolymers (C5 to C7) (H- and Y-shaped polypropylene homopolymer) are made according to EP 879 830 (example 1) whilst adjusting the MFR with the amount of butadiene. C5 has a MFR230/2.16 of 2.2 g/10min, a tensile modulus of 1950 MPa and a branching index g' of 0.7 ("C5"). C6 has a MFR230/2.16 of 3.3 g/10min, a tensile modulus of 1950 MPa and a branching index g' of 0.7 ("C6"). And C7 has a MFR230/2.16 of 4.0 g/10min, a tensile modulus of 1950 MPa and a branching index g' of 0.7 ("C7"), respectively.

So, HMS-PPs of different melt flow rates have been used to make blown films. One may expect an indirect proportionality of maximum output versus melt flow rate. The lower the melt flow rate, the higher the stable output. This relationship is confirmed for the series of linear polypropylenes and HMS-PPs. However, the inventive material shows much higher stable output at same MFR compared to known systems (see Figure 6).

It showed that the inventive material E1 is superior in its processing properties with several respect: First, the bubble stability (a critical parameter for blown film making with linear polypropylenes) is significantly enhanced with the multibranched polypropylenes. Secondly, the maximum output which can be achieved is higher by 50 % compared to Z/N systems (C1) and higher by 20 % compared with HMS-PP (C5 to C7). Commercially, this is an important finding since it allows utilizing the assets of blown-film makers much more efficient and hence reduces total production costs.

**Table 8:** Maximum output

| Material | | | C1 | C5 | C6 | C7 | E1 |
|---|---|---|---|---|---|---|---|
| $MFR_{230/2\cdot 1}$ | g/10min | MFR | 1,9 | 2,2 | 3,3 | 4 | 4 |
| F30 | cN | Rheotens | 12 | 13 | 9 | 7 | 10 |
| v30 | mm/s | Rheotens | 125 | 167 | 162 | 168 | 180 |
| BF Output, max | m/min | Alpine 35 | 16,6 | 21,5 | 11,7 | 10,8 | 25,0 |

## Claims

1. Blown film comprising a polypropylene, wherein the film and/or the polypropylene has (have)

   (a) an ethylene content of not higher than 10.00 mol%, and
   (b) a multi-branching index (MBI) of at least 0.15, wherein the multi-branching index (MBI) is defined as the slope of strain hardening index (SHI) as function of the logarithm to the basis 10 of the Hencky strain rate (lg (dε/dt)), wherein
   dε/dt is the deformation rate,
   ε is the Hencky strain, and
   the strain hardening index (SHI) is measured at 180 ˚C, wherein the strain hardening index (SHI) is defined as the slope of the logarithm to the basis 10 of the tensile stress growth function (lg ($\eta_E^+$)) as function of the logarithm to the basis 10 of the Hencky strain (lg (ε)) in the range of Hencky strains between 1 and 3.

2. Blown film according to claim 1, wherein the film and/or the polypropylene has (have)

   a) a branching index g' of less than 1.00 and/or
   b) a strain hardening index (SHI@$1s^{-1}$) of at least 0.30 measured by a deformation rate (dε/dt) of 1.00 $s^{-1}$ at a temperature of 180 ˚C.

3. Blown film according to anyone of the preceding claims, wherein the film is
   **characterized in that**

   a) the heat sealing initiation temperature (SIT) of said film together with the tensile modulus ($E_{IM}$) of said film in an injection-molded state measured according to ISO 527-2; and/or
   b) the heat sealing initiation temperature (SIT) of said film together with the tensile modulus ($E_{IM}$) of the polypropylene of said film in an injection-molded state measured according to ISO 527-2 fulfil(s) the equation

$$SIT\ [°C] - 0.03 \cdot E_{IM}\ [MPa] \leq 92.$$

4. Blown film according to anyone of the preceding claims, wherein said film has gels with a diameter of equal or less than 500 μm and wherein said gels are not more than 100 gels per square meter (sqm).

**5.** Blown film according to anyone of the preceding claims, wherein the polypropylene is a propylene homopolymer.

**6.** Blown film according to anyone of the preceding claims, wherein the polypropylene is propylene copolymer, preferably an ethylene propylene copolymer.

**7.** Blown film according to anyone of the preceding claims, wherein the propylene copolymer comprises a polypropylene matrix and an ethylene-propylene rubber (EPR).

**8.** Blown film according to claim 7, wherein the ethylene-propylene rubber (EPR) has an ethylene content of up to 50 wt%.

**9.** Blown film according to anyone of the preceding claims, wherein the polypropylene has been produced in the presence of a catalyst system comprising an asymmetric catalyst, wherein the catalyst system has a porosity of less than 1.40 ml/g.

**10.** Blown film according to claim 9, wherein the asymmetric catalyst is dimethylsilyl [(2-methyl-(4'-tert. butyl)-4-phenylindenyl)(2-isopropyl-(4'-tert. butyl)-4-phenylindenyl)]zirconium dichloride.

**11.** Use of the blown film according to anyone of the preceding claims as packaging material.

**12.** Article comprising a blown film according to anyone of the claims 1 to 10 and/or a polypropylene according to in anyone of the claims 1, 2 and 4 to 10.

**13.** Use of the polypropylene as defined in anyone of the claims 1, 2 and 4 to 10 for a blown film and/or for an article comprising a blown film.

**Patentansprüche**

**1.** Blasfolie umfassend ein Polypropylen, worin die Folie und/oder das Polypropylen hat (haben)

(a) ein Ethylenanteil von nicht mehr als 10 mol-% und
(b) einen mehrfach Verzweigungsindex (MVI) [multi-branching index (MBI)] von mindestens 0,15, worin der mehrfach Verzweigungsindex (MVI) [multi-branching index (MBI)] definiert ist als die Steigung des Dehnungs-Verfestigungs-Index (DVI) [strain hardening index (SHI)] als Funktion des dekadischen Logarithmus der Hencky Dehnung (lg (dε/dt)), worin
dε/dt die Verformungsgeschwindigkeit ist,
ε ist die Hencky Dehnung und
der Dehnungs-Verfestigungs-Index (DVI) [strain hardening index (SHI)] bei einer Temperatur von 180°C gemessen wird, worin der Dehnungs-Verfestigungs-Index (DVI) [strain hardening index (SHI)] definiert ist als die Steigung des dekadischen Logarithmus der Zug-Spannungs-Wachstumsfunktion (lg ($\eta_E^+$)) als Funktion des dekadischen Logarithmus der Hencky Dehnung (lg(ε)) im Bereich der Hencky Dehnung von 1 bis 3.

**2.** Blasfolie nach Anspruch 1, worin die Folie und/oder das Polypropylen hat (haben)

(a) einen Verzweigungsindex g' von weniger als 1,00 und/oder
(b) einen Dehnungs-Verfestigungs-Index (DVI@1sec$^{-1}$) [strain hardening index (SHI@1s$^{-1}$)] von mindestens 0,30 gemessen mit einer Verformungsgeschwindigkeit (dε/dt) von 1,00 sec$^{-1}$ bei einer Temperatur von 180°C.

**3.** Blasfolie nach irgendeinem der vorhergehenden Ansprüche, worin die Folie **dadurch gekennzeichnet ist, dass**

(a) die Heißverschweißungsanfangstemperatur (SIT) (heat sealing initiation temperatur) des besagten Films zusammen mit dem Zug-ElastizitätsModul ($E_{IM}$) des besagten Films gemessen nach ISO 527-2 in einem spritzgegossenen Zustand und/oder
(b) die Heißverschweißungsanfangstemperatur (SIT) [heat sealing initiation temperatur] des besagten Films zusammen mit dem Zug-ElastizitätsModul ($E_{IM}$) des Polypropylen des besagten Films gemessen nach ISO 527-2 in einem spritzgegossenen Zustand die Gleichung

$$SIT\ [°C]-0.03 \cdot E_{IM}\ [MPa] \leq 92$$

erfüllt (erfüllen).

**4.** Blasfolie nach irgendeinem der vorhergehenden Ansprüche, worin die Folie Gele mit einem Durchmesser von 500 μm oder weniger hat und worin besagte Gele nicht mehr als 100 Gele/$m^2$ (sqm) vorhanden sind.

**5.** Blasfolie nach irgendeinem der vorhergehenden Ansprüche, worin das Polypropylen ein Propylenhomopolymer ist.

**6.** Blasfolien nach irgendeinem der vorhergehenden Ansprüche, worin das Polypropylen ein Propylencopolymer, vorzugsweise ein Ethylen-Propylen-Copolymer, ist.

**7.** Blasfolie nach irgendeinem der vorhergehenden Ansprüche, worin das Porpylencopolymer eine Polypropylenmatrix und einen Ethylen-Propylen-Gummi (EPR) umfasst.

**8.** Blasfolien nach Anspruch 7, worin der Ethylen-Propylen-Gummi (EPR) ein Ethylenanteil von bis zu 50 Gew.-% hat.

**9.** Blasfolie nach irgendeinem der vorhergehenden Ansprüche, worin das Polypropylen in der Gegenwart eines Katalysatorsystems hergestellt worden ist, worin das Katalysatorsystem einen asymmetrischen Katalysator umfasst, worin das Katalysatorsystem eine Porosität von weniger als 1,40 ml/g hat.

**10.** Blasfolie nach Anspruch 9, worin der asymmetrische Katalysator Dimethylsilyl [(2-Methyl-(4'-tert.butyl)-4-phenylindenyl)(2-isopropyl-(4'-tert.butyl)-4-phenylindenyl)]zirkonium dichlorid ist.

**11.** Verwendung der Blasfolie nach irgendeinem der vorhergehenden Ansprüche als Verpackungsmaterial.

**12.** Gegenstand umfassend eine Blasfolie nach irgendeinem der Ansprüche 1 bis 10 und/oder ein Polypropylen nach irgendeinem der Ansprüche 1, 2 und 4 bis 10.

**13.** Verwendung des Polypropylens wie in irgendeinem der Ansprüche 1, 2 und 4 bis 10 definiert für eine Blasfolie und/oder für einen Gegenstand umfassend eine Blasfolie.

## Revendications

**1.** Film soufflé comprenant un polypropylène, dans lequel le film et/ou le polypropylène a (ont)

(a) une teneur en éthylène ne dépassant pas 10,00 % en moles,
et
(b) un indice de ramification multiple (MBI) d'au moins 0,15, dans lequel l'indice de ramification multiple (MBI) est défini comme la pente de l'indice d'écrouissage (SHI) en fonction du logarithme à la base 10 de la vitesse de déformation de Hencky (1g (dε/dt)), où
dε/dt est la vitesse de déformation,
ε est la contrainte de Hencky, et
l'indice d'écrouissage (SHI) est mesuré à 180˚C, l'indice d'écrouissage (SHI) étant défini comme la pente du logarithme à la base 10 de la fonction de croissance de la contrainte de traction (1g ($\eta_E^+$)) en fonction du logarithme à la base 10 de la contrainte de Hencky (1g (ε)) dans la plage des contraintes de Hencky comprises entre 1 et 3.

**2.** Film soufflé selon la revendication 1, dans lequel le film et/ou le polypropylène a (ont)

a) un indice de ramification g' inférieur à 1,00 et/ou
b) un indice d'écrouissage (SHI à 1 $s^{-1}$) d'au moins 0,30 mesuré à une vitesse de déformation (dε/dt) de 1,00 $s^{-1}$ à une température de 180 ˚C.

**3.** Film soufflé selon l'une quelconque des revendications précédentes, dans lequel le film est **caractérisé en ce que**

a) la température de début de thermo-scellage (SIT) dudit film conjointement avec le module d'élasticité en traction ($E_{IM}$) dudit film dans un état moulé par injection mesurés selon la norme ISO 527-2 ; et/ou
b) la température de début de thermo-scellage (SIT) dudit film conjointement avec le module d'élasticité en traction ($E_{IM}$) du polypropylène dudit film dans un état moulé par injection mesurés selon la norme ISO 527-2 satisfait (satisfont) l'équation

$$SIT\ [°C] - 0{,}03 \cdot E_{IM}\ [MPa] \leq 92.$$

**4.** Film soufflé selon l'une quelconque des revendications précédentes, dans lequel ledit film a des gels d'un diamètre inférieur ou égal à 500 µm et dans lequel lesdits gels ne sont pas plus de 100 par mètre carré ($m^2$).

**5.** Film soufflé selon l'une quelconque des revendications précédentes, dans lequel le polypropylène est un homopolymère de propylène.

**6.** Film soufflé selon l'une quelconque des revendications précédentes, dans lequel le polypropylène est un copolymère de propylène, de préférence un copolymère éthylène-propylène.

**7.** Film soufflé selon l'une quelconque des revendications précédentes, dans lequel le copolymère de propylène comprend une matrice de polypropylène et un caoutchouc éthylène-propylène (EPR).

**8.** Film soufflé selon la revendication 7, dans lequel le caoutchouc éthylène-propylène (EPR) a une teneur en éthylène pouvant atteindre 50 % en poids.

**9.** Film soufflé selon l'une quelconque des revendications précédentes, dans lequel le polypropylène a été produit en présence d'un système catalyseur comprenant un catalyseur asymétrique, dans lequel le système catalyseur a une porosité inférieure à 1,40 ml/g.

**10.** Film soufflé selon la revendication 9, dans lequel le catalyseur asymétrique est le dichlorure de diméthylsilyl-[(2-méthyl-(4'-tert-butyl)-4-phényl-indényl)(2-isopropyl-(4'-tert-butyl)-4-phényl-indényl)]zirconium.

**11.** Utilisation du film soufflé selon l'une quelconque des revendications précédentes en tant que matériau d'emballage.

**12.** Article comprenant un film soufflé selon l'une quelconque des revendications 1 à 10 et/ou un polypropylène selon l'une quelconque des revendications 1, 2 et 4 à 10.

**13.** Utilisation du polypropylène tel que défini dans l'une quelconque des revendications 1, 2 et 4 à 10 pour un film soufflé et/ou pour un article comprenant un film soufflé.

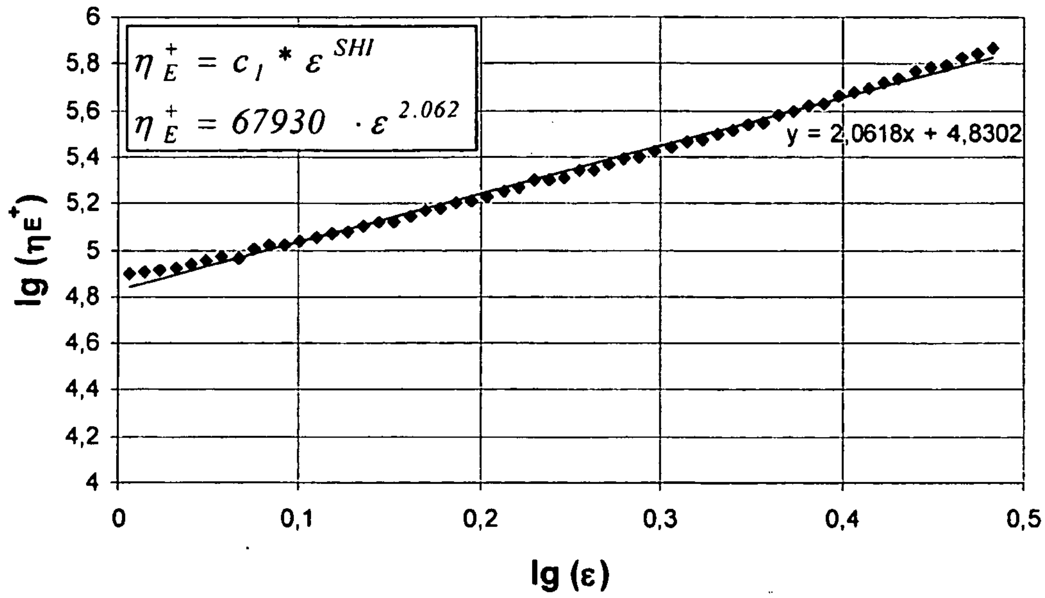


**Figure 1** Determination of the SHI of "A" at a strain rate of $0.1s^{-1}$ ($SHI@0.1s^{-1}$ is determined to be 2.06)

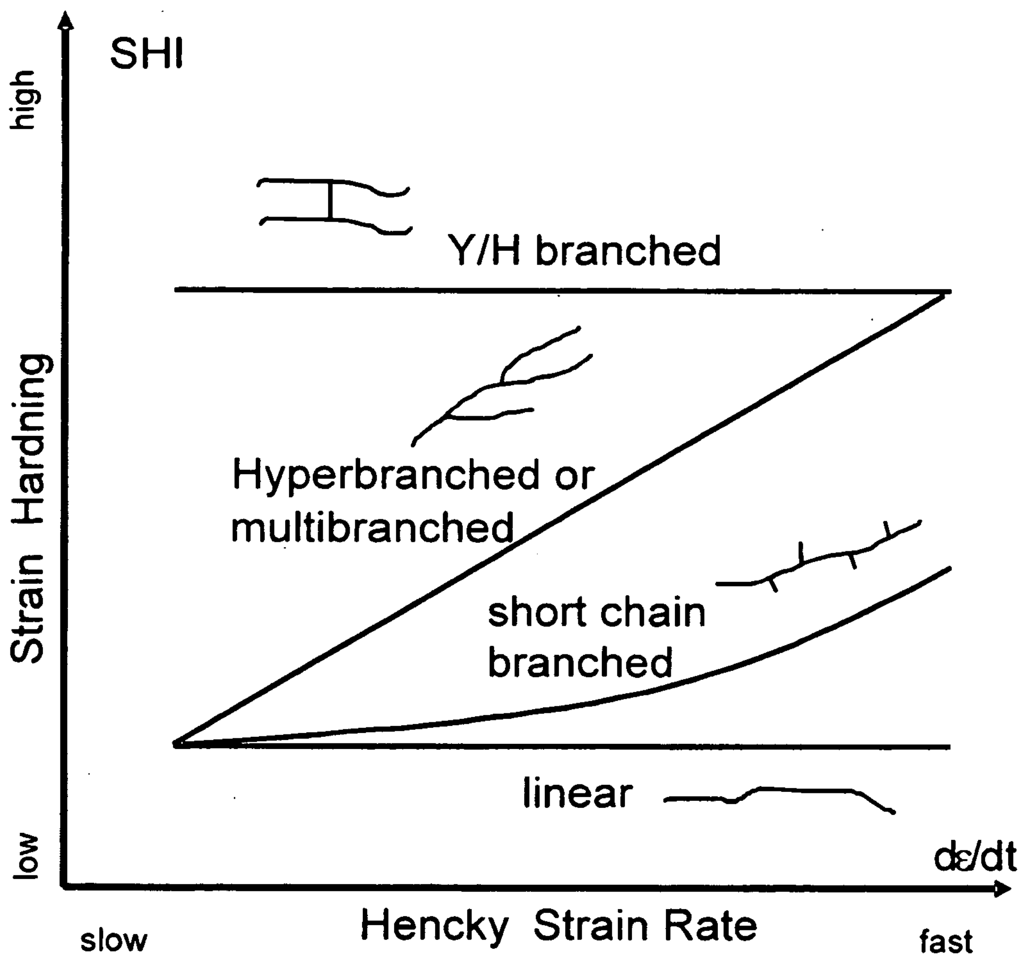


**Figure 2** Deformation Rate versus Strain Hardening

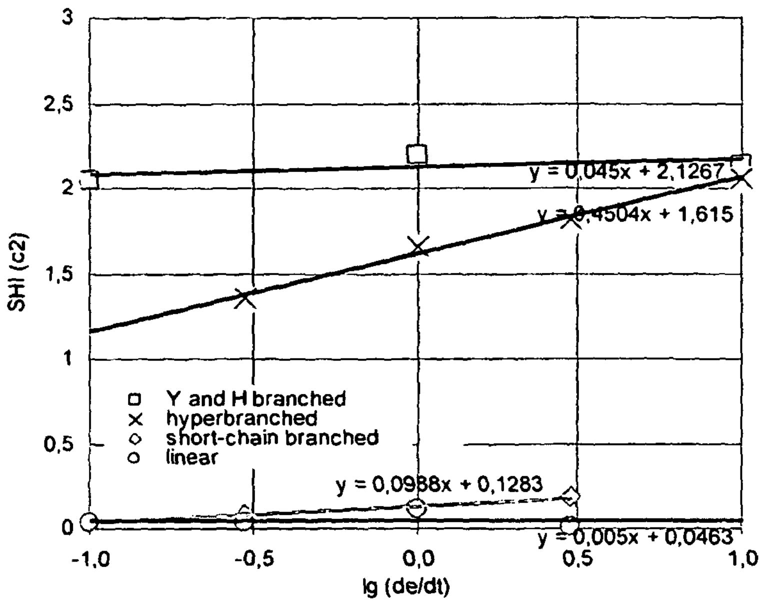
3
2,5
2
1,5
1
0,5
0
SHI (c2)
-1,0
-0,5
0,0
0,5
1,0
lg (de/dt)
y = 0,045x + 2,1267
y = 0,4504x + 1,615
y = 0,0988x + 0,1283
y = 0,005x + 0,0463
Y and H branched
hyperbranched
short-chain branched
linear

**Figure 3**

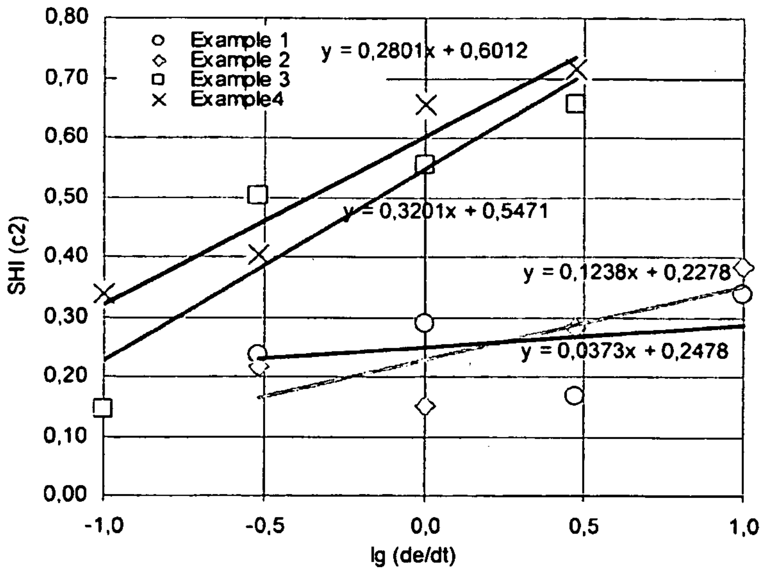
0,80
0,70
0,60
0,50
0,40
0,30
0,20
0,10
0,00
SHI (c2)
Example 1
Example 2
Example 3
Example4
y = 0,2801x + 0,6012
y = 0,3201x + 0,5471
y = 0,1238x + 0,2278
y = 0,0373x + 0,2478
-1,0
-0,5
0,0
0,5
1,0
lg (de/dt)

**Figure 4**

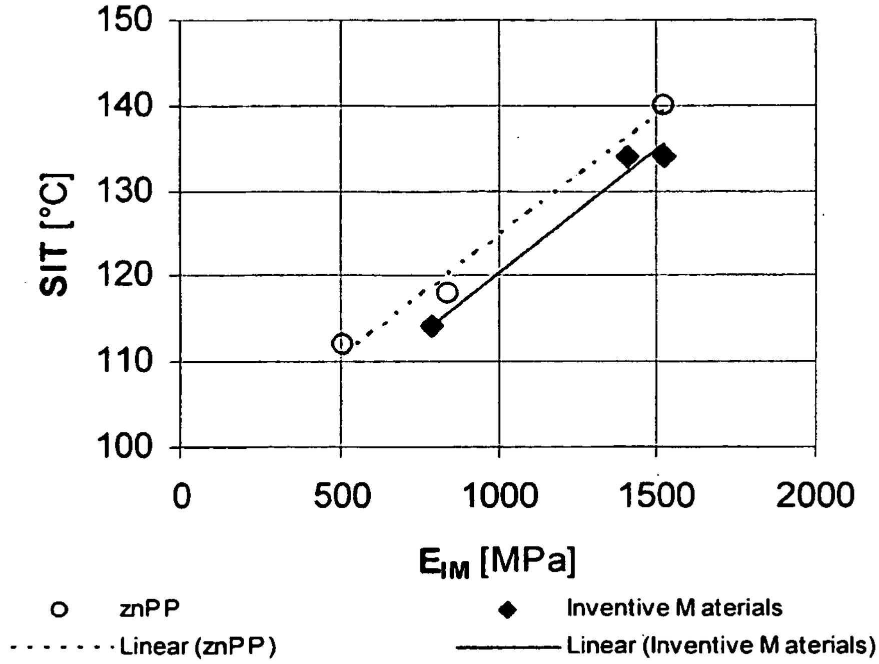


**Figure 5** Sealing Temperature

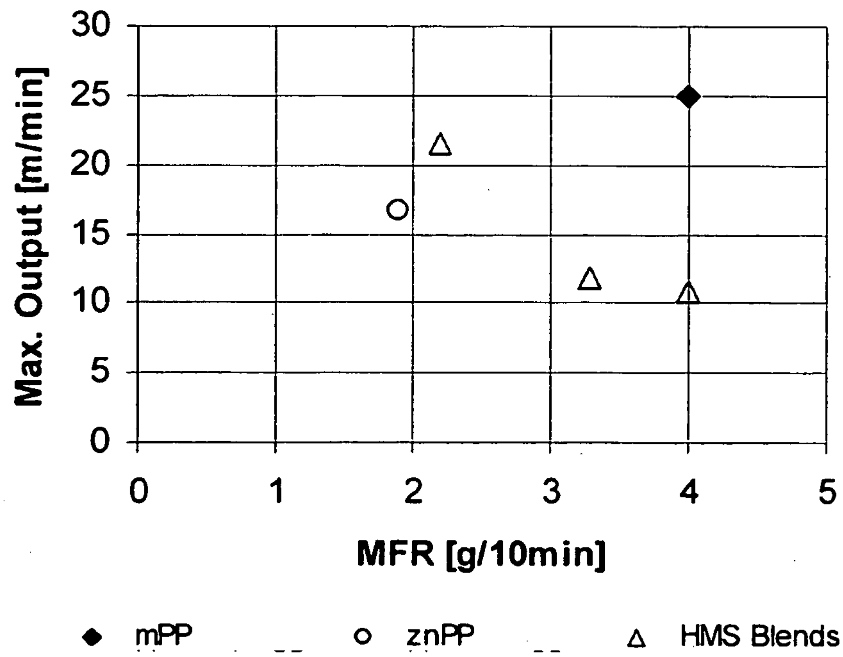


**Figure 6** Blown Film Output

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 0148034 A
- WO 03051934 A
- WO 9428034 A
- EP 0887379 A
- WO 9212182 A
- WO 9722633 A
- EP 879830 A


### Non-patent literature cited in the description


- **B.H. Zimm ; W.H. Stockmeyer.** *J. Chem. Phys.,* 1949, vol. 17, 1301
- **R. Chujo ; T. Asakura.** *Polymer,* 1988, vol. 29, 138-43
- **Chujo R et al.** *Polymer,* 1994, vol. 35, 339
- **T. Hayashi ; Y. Inoue ; R. Chüjö ; T. Asakura.** *Polymer,* 1988, vol. 29, 138-43